# EUROPÄISCHE PATENTANMELDUNG

(11) **EP 4 813 624 A1**
(43) Veröffentlichungstag der Anmeldung: **30.09.2026**
(21) Anmeldenummer: 26166395.9
(22) Anmeldetag: 20.03.2026
(51) Int. Cl.: B32B 3/12, B32B 3/02, B32B 3/06, B32B 3/30, B32B 5/02, B32B 5/12, B32B 27/12

(54) **MONOPOLYMER-SANDWICH-BAUTEIL UND HERSTELLVERFAHREN**

(30) Priorität: 24.03.2025 DE 102025111172
(71) Anmelder: Diehl Aviation Laupheim GmbH, 88471 Laupheim (DE)
(72) Erfinder: Böhm, Christian, 88525 Dürmentingen (DE); Hesselbach, Florian, 89134 Blaustein (DE); Kafe, Ammar, 88471 Laupheim (DE); Latsuzbaya, Temuri, 89073 Ulm (DE)
(74) Vertreter: Diehl Patentabteilung

(57) **Zusammenfassung**

Ein Sandwich-Bauteil (2) für eine Innenausstattung einer Passagierkabine eines Passagierflugzeuges, mit einer flächigen, ein Grundpolymer (14) enthaltenden Kernlage (12) mit zwei Flachseiten (18a,b), enthaltend Kernelemente (16) in Form von Wabenkernen, und mit zwei faserverstärkten, das Grundpolymer (14) enthaltenden Decklagen (20a,b) an den Flachseiten (18a,b), ist nach einem Monopolymerprinzip aufgebaut ist, bei dem die Kernlage (12) und die beiden Decklagen (20a,b) aus dem gleichen Polymer in Form des Grundpolymers (14) aufgebaut sind, und die Decklagen (20a,b) sind ausschließlich dank des Grundpolymers (14) ohne Zwischenlage einer stofffremden Klebeschicht an der Kernlage (12) befestigt.

Eine Bauteilanordnung (94) enthält das Sandwich-Bauteil (2) und Anbauteile (6), die zumindest zur Verbindung mit dem Sandwich-Bauteil (2) das Grundpolymer (14) enthalten.

Bei einem Verfahren zur Herstellung des Sandwich-Bauteils (2) werden entweder die Decklagen (20a,b) und die Kernlage (12) in einer Kaschieranlage (106) miteinander zu einem zweidimensionalen Sandwich-Bauteil (2) verbunden oder die Decklagen (20a,b) mit auf der zweiten Decklage (20b) aufliegenden Kernlage (12) werden in einer Thermoformanlage (116) auf die Schmelztemperatur aufgeheizt und in einem Werkzeug (42) zu einem dreidimensionalen Sandwich-Bauteil (2) umgeformt, wobei sich vor Abkühlen unter die Glasübergangstemperatur die beiden Decklagen (20a,b) und die Kernlage (12) in einem nahezu schmelzflüssigen Zustand befinden, so dass eine Verbindung rein über die Schmelze erfolgen kann.

## Beschreibung

Die Erfindung betrifft ein Sandwich-Bauteil für eine Innenausstattung einer Passagierkabine eines Passagierflugzeuges.

Aus der EP 4 470 766 A1 ist ein Herstellverfahren für Flugzeug-Sandwich-Bauteile bekannt, umfassend einen thermoplastischen Schaumkern, eine obere und eine untere faserverstärkte Deckschicht aus thermoplastischem Material, wobei die Materialien in einer temperierten Presse miteinander verbunden werden.

Aufgabe der Erfindung ist es, Verbesserungen in Bezug auf ein Sandwich-Bauteil vorzuschlagen.

Die Aufgabe wird gelöst durch ein Sandwich-Bauteil gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Bauteil ist ein solches für eine Innenausstattung einer Kabine eines Passagierflugzeuges. Das Bauteil enthält eine Kernlage, welche sich flächig erstreckt und ein Polymer enthält. Die Kernlage enthält wenigstens ein Kernelement in Form eines Wabenkerns. Die Kernlage weist aufgrund ihrer flächenhaften Erstreckung bzw. Ausbildung eine erste Flachseite und eine gegenüberliegende zweite Flachseite auf.

Das Bauteil enthält eine erste Decklage, die faserverstärkt ausgeführt ist und ebenfalls das Polymer enthält. Die erste Decklage ist an der ersten Flachseite der Kernlage angeordnet. Das Bauteil enthält auch eine zweite Decklage. Diese ist ebenfalls faserverstärkt und enthält das Polymer. Die zweite Decklage ist an der zweiten Flachseite der Kernlage angeordnet.

Das Bauteil ist nach einem Monopolymerprinzip aufgebaut. Demgemäß sind die Kernlage und die beiden Decklagen aus dem gleichen Polymer in Form eines Grundpolymers aufgebaut.

Die beiden Decklagen sind ausschließlich dank des Grundpolymers und ohne Zwischenlage einer stofffremden Klebeschicht jeweils an der Kernlage befestigt.

Das Grundpolymer ist insbesondere PEI, Polyetherimid, kann aber auch jedes weitere Hochleistungspolymer sein.

Gemäß der Erfindung ergeben sich recyclebare thermoplastische Monopolymer-Innenausstattungsbauteile. Für die Umsetzung eines solchen recyclebaren thermoplastischen Monopolymer-Innenausstattungsbauteils werden also thermoplastische Decklagen mit einer thermoplastischen Wabe (Kernelemente) kombiniert. Die Bauweise ist so gewählt, dass durch Verwendung eines Polymers ein hoher Recyclinggrad erzielt werden kann. Gegenüber einer duroplastischen Bauweise wird zumindest Gewichtsneutralität erreicht.

Mit anderen Worten wird - um einen hohen Recyclinggrad zu erzielen - ein Monopolymereinsatz verfolgt. Dementsprechend besteht das Sandwich bzw. Bauteil und eventuelle Anbauteile (siehe unten) aus dem gleichen Grundpolymer (insbesondere PEI, dies können aber auch andere Thermoplaste sein).

In einem Rohteil besteht der Grundaufbau dabei also aus einer faserverstärkten oberen (ersten) Decklage, einer Wabe (Kernelement) und einer faserverstärkten unteren (zweiten) Decklage.

Gemäß der Erfindung ergeben sich folgende Vorteile:
- Es ergeben sich recyclingfähige Kabineninnenausstattungsbauteile.
- Es erfolgt eine Reduktion der Materialmixes auf ein Minimum (Monopolymeransatz) zur Erzielung eines höchstmöglichen Recyclinggrades.
- Die Bauteile sind mindestens gewichtsneutral gegenüber duroplastischen Bauteilen. Eine Gewichtseinsparung ergibt sich sowohl aus Einsparungen beim Lack auf Grund besserer Oberflächenqualitäten und auf Grund besserer mechanischer Eigenschaften thermoplastischer Decklagen bei gleichem Gewicht im Vergleich zu duroplastischen Decklagen.
- Der Monopolymeransatz bezieht sich nicht nur auf das Rohteil (Sandwich-Bauteil: Kernlage mit den beiden Decklagen), sondern erstreckt sich über das gesamte Bauteil (Bauteilanordnung, siehe unten), so dass Stoffgruppen vor dem Recycling nicht getrennt werden müssen.
- Die Erfindung beschreibt einen Monopolymer-Sandwichaufbau, der in Flugzeugkabinen eingesetzt werden kann. Dies ermöglicht einen sehr hohen Recyclinggrad.
- Das Fügen der Komponenten Wabe (Kernelemente) und jeweiliger Decklage erfolgt ohne zusätzlichen Fügepartner, welches zu einer Gewichtsersparnis führt.
- Die Bauweise ermöglicht einen vorteilhaften Mix aus Recyclingfähigkeit, Gewicht und mechanischen Eigenschaften. Im Gegensatz zu einem Schaumkern kann (dank des Wabenkerns) ein besseres Verhältnis zwischen Gewicht und mechanischen Eigenschaften erzielt werden.

Bauteile können z.B. sein:
- Ebene Sandwichpaneele zur Anwendung in Lavatorys, Fußböden, Gepäckfächern, Galleys.
- Dreidimensional geformte Kabinenverkleidungen wie z.B. Seitenwände, Decken, Cove Light Panels, Air Outlet Panels.

In einer bevorzugten Ausführungsform sind die erste und / oder die zweite Decklage oder -schicht dadurch faserverstärkt, dass unidirektionale Fasertapes ausschließlich entlang von Lastpfaden angeordnet sind und die übrigen Bereiche faserfrei gehalten sind.

Mit anderen Worten ergibt sich hier ein partiell belegtes thermoplastisches (z.B. Seitenwand-)Bauteil. Die Idee dahinter ist: Damit eine thermoplastische Bauweise für Kunden in der Luftfahrt interessant ist, muss diese zumindest gewichtsneutral oder leichter als konventionelle Bauweisen sein, da das Gewicht unmittelbar mit der CO2-Einsparung einhergeht und damit einen Beitrag zu einer nachhaltigeren Luftfahrt leistet.

Um diesen Gewichtsvorteil zu erlangen, können auf der Rückseite einer Seitenwand (z.B. zweite Decklage) unidirektionale Tapes in Lastrichtung der Lastpfade des Bauteils mittels einer Automated-Fiber-Placement Technologie aufgebracht werden. Da Bereiche, welche nicht durch ein Tape abgedeckt sind, nichts zur statischen Integrität beitragen können diese auf ein Minimum (ca. 2-3 mm Höhe) ausgefräst werden.

Die partielle Belegung steht im Gegensatz zu aus der Praxis bekannten Bauteilen: Solche bekannten Liningbauteile werden in duroplastischer Bauweise mit oben und unten (ersten und zweiten) durchgehenden Decklagen hergestellt. Dem steht nun eine partielle Belegung mit duroplastischen Materialien gegenüber.

Eigenschaften dieser Ausführungsform sind z.B.:
- Tapebreite: 12,5 mm
- Tapefaser: Kohlenstoff
- Tapeflächengewicht: 145g/m²
- Der Anteil an nicht belegter Fläche entspricht ca. 26 %
- Bei der UD-Ablage (UD: unidirektionales Tape) werden bis zu 10 Lagen übereinandergelegt. Dies entspricht eine Materialdicke von insgesamt 1,6 mm.
- Ein FST-Schutz (FST: Fire, Smoke and Toxicity) ist durch inhärente Eigenschaften des PEI gegeben.

Es ergibt sich
- Gewichtsersparnis durch partielle Belegung und lokal ausgefräste Wabe.
- Erhöhung der Automatisierbarkeit durch automatische Tapeablage.
- Erfüllung des Monopolymeransatzes, da Wabe, Decklagen und Tapes aus gleichem Polymer.

In einer Variante dieser Ausführungsform ist daher in wenigstens einem der faserfrei gehaltenen Bereiche das Kernelement bis auf eine Restschicht ausgespart. Die Aussparung erfolgt insbesondere durch die oben genannte lokale Ausfräsung. Die Restschicht des Kernelements ist das oben genannte "Minimum von z.B. 2-3mm Stärke / Schichtdicke". Der Flächenabschnitt des Bauteils, in dem die Aussparung liegt, ist ein solcher, der nicht zur statischen Integrität des Bauteils beiträgt, der also statisch nicht relevant ist. Die Vorteile wurden oben bereits erwähnt.

In einer bevorzugten Ausführungsform sind die erste und / oder zweite Decklage dadurch faserverstärkt, dass glasfaserverstärkte unidirektionale Gewebestreifen kreuzweise angeordnet sind und die übrigen Bereiche faserfrei gehalten sind.

So ergibt sich ein recyclebares thermoplastisches Seitenwandbauteil in Leichtbauweise. Idee dahinter ist wieder: damit eine thermoplastische Bauweise für Kunden in der Luftfahrt interessant ist, muss diese zumindest gewichtsneutral oder leichter als konventionelle Bauweisen sein, da das Gewicht unmittelbar mit der CO2-Einsparung einhergeht und damit einen Beitrag zu einer nachhaltigeren Luftfahrt leistet.

Um diesen Gewichtsvorteil zu erlangen, können anstelle von konventionell gewebten Faserverstärkungen thermoplastische UD-Tape Gewebe (verbessertes Gewichts-Festigkeitsverhältnis) aus Glas- oder Kohlenstofffasern verwendet werden. Hierbei wird auf industriell taugliche Webverfahren gesetzt.

Demgegenüber steht in aus der Praxis bekannten Bauteilen die Herstellung und Verarbeitung von thermoplastischen Halbzeugen mit konventionellen Geweben. Dabei wird die Matrix in das Gewebe eingebracht (Organosheet). Vorliegend werden dagegen UD-Tape Gewebe (gekreuzte Anordnung jeweils parallel verlaufender Tapes mit Abstand zueinander) im duroplastischen Bereich genutzt; diese sind am Markt verfügbar.

Folgende Eigenschaften sind z.B. denkbar:
- Tapebreite: 12,5 mm - 25 mm
- Tapefaser: Kohlenstoff
- Gewebeflächengewicht: 97 - 145g/m²
- Leinwand- oder Köperbindung
- Inhärenter FST-Schutz durch PEI Tape
- Gewebedicke: 0,32 mm

Somit ergibt sich:
- Gewichtsersparnis von 68% (450 g/m² Organosheet vs. 145 g/m² UD-Tape Gewebe) pro Decklage.
- Bessere Drapierbarkeit und ggf. Verkürzung der Zykluszeit, da weniger Masse erhitzt werden muss.
- UD-Tapes sind als industrielles Halbzeug von zahlreichen Lieferanten lieferbar, dadurch verbreitert sich die Lieferantenbasis im Vergleich zu konventionellen Organosheets.
- Hybridaufbauten Glas/Carbon möglich zur Realisierung eines kostengünstigen Leichtbauansatzes.
- Geringere Faserondulation führt zu besseren mechanischen Eigenschaften als Organosheets auf Gewebebasis.

In einer bevorzugten Ausführungsform sind die erste und / oder die zweite Decklage dadurch faserverstärkt, dass die Decklage aus einem taylored blank gebildet ist, das unidirektionale Gewebestreifen enthält, die miteinander vorkonsolidiert sind. Die übrigen Bereiche (Lücken zwischen den Gewebestreifen) sind wieder faserfrei gehalten.

So ergibt sich ein Taylored-Blank-belegtes thermoplastisches Sandwichbauteil. Grundidee hierbei ist folgende:
- Es wird mittels des Taylored Blank-Verfahrens ein lastpfadgerechtes Taylored Blank abgelegt - die Einzellagen zueinander sind dabei miteinander verschweißt.
- Das vorkonsolidierte taylored Blank kann entweder monolithisch oder gemeinsam mit einer Decklage und einem Wabenkern zu einem dreidimensionalen Bauteil umgeformt werden.

Die Technologie der Taylored Blanks ist insbesondere in der Automobilindustrie und zur Herstellung von monolithischen Bauteilen hinreichend bekannt. Das Material kann frei gewählt werden (Glas- oder Kohlefaserverstärkt). Daher bilden die am Markt verfügbaren UD-Tapes die Basis für die Taylored Blanks.

Es ergibt sich:
- ein Lastpfadgerechter Einsatz des UD-Geleges und damit Gewichtseinsparung im Vergleich zu einem vollflächigen Organosheet
- ein hoher Automatisierungsgrad
- UD-Tapes sind als industrielles Halbzeug von zahlreichen Lieferanten lieferbar
- eine Verkürzung von Prozesszeiten, da Verstärkungslagen nicht händisch vor dem Umformprozess positioniert werden müssen.

In einer bevorzugten Ausführungsform enthält das Bauteil eine Dekorlage, die auf einer der Kernlage abgewandten Flachseite der ersten Decklage angeordnet ist. Die Dekorlage ist insbesondere auf das restliche Bauteil aufgespritzt, insbesondere durch Kaltgasspritzen.

Es ergibt sich ein recyclebares, insbesondere aufgespritztes, thermoplastisches Dekor. Idee hierbei ist folgende:
- Um dem Monopolymeransatz zur Erzielung eines nahezu vollständig recyclebaren Linings gerecht zu werden, bedarf es neben Pulver- und Nasslack neuen Oberflächenkonzepten. Dabei wird sowohl das Rohteil als auch die Oberfläche aus dem gleichen Polymer abgebildet.
- Das Polymer wird insbesondere über das Kaltgasspritzen auf die thermoplastische Oberfläche aufgespritzt. Dabei schmelzen beim Aufspritzen sowohl die Polymerpartikel als auch das Substrat leicht an, so dass eine gute Haftung erzielt werden kann.

Im Gegensatz hierzu werden bei bekannten Bauteilen im Lining Oberflächen über Dekorfolien oder Nasslack abgebildet. Das Kaltgasspritzen hingegen ist ein etabliertes Verfahren, um metallische Oberflächen mit einem Kunststoff zu beschichten. Vorliegend erfolgt dagegen die Beschichtung eines thermoplastischen Polymers auf ein thermoplastisches Substrat.

Es ergeben sich folgende Eigenschaften:
Eigenschaften:
   - FST-konform, da inhärent flammhemmend
   - Dicke: 85 - 105 µm
   - Reinigungseigenschaften analog zu den Eigenschaften des PEI an sich (gut abwaschbar, beständig gegenüber Reinigungsmittel z.B. HoneyBee 90, IsoPropylAlcohol).
Es ergibt sich
   - ein Entfall einer aufwendigen Entfernung der Oberflächen (Nass-/Pulverlack) mittels Strahlverfahren, um ein Monopolymerbauteil für ein nahezu vollständiges Recycling zu erzielen
   - Gewichtseinsparung durch Verzicht auf Leitfüller und konventionellen Füller. Unebenheiten können durch lokal höheren Partikelauftrag ausgeglichen werden.

In einer bevorzugten Ausführungsform weist das Grundpolymer der ersten Decklage an einer der Kernlage abgewandten Flachseite eine Prägung auf.

Damit ergibt sich ein recyclebares, geprägtes thermoplastisches Dekor.

Idee dahinter ist wieder die folgende: Um dem Monopolymeransatz zur Erzielung eines nahezu vollständig recyclebaren Linings gerecht zu werden, bedarf es neben Pulver- und Nasslack neuen Oberflächenkonzepten. Dabei wird sowohl das Rohteil (Sandwich aus Kernlage und den beiden Decklagen) als auch die Oberfläche aus dem gleichen Polymer abgebildet. Zur Herstellung des Organosheets wird ein bereits eingefärbtes, gemahlenes Kunststoffgranulat verwendet. Das Konsolidieren erfolgt insbesondere mittels einer Stahlbanddoppelbandpresse. Nachdem sich das Polymer im schmelzflüssigen Zustand zur vollständigen Konsolidierung befindet, durchläuft es eine Abkühlzone. In dieser Zone kann eine geprägte Walze eingebracht werden, die eine Strukturierung auf das Material einbringt. Alternativ kann ein vorgeprägtes Stahlband verwendet werden oder ein geprägtes Werkzeug im Umformprozess. Es gibt bereits eingefärbte Organosheets, jedoch können unterschiedliche Heiztemperaturen zu einem unterschiedlichen Oberflächenglanzgrad führen. Um diesen zu kaschieren können die Organosheets vorgeprägt werden.

Aus der Praxis ist es bekannt, dass im Lining Oberflächen über Dekorfolien oder Nasslack abgebildet werden. Eingefärbte Organosheets sind am Markt bereits frei verfügbar. Das Prägen von Oberflächen ist in der Papierindustrie ein etabliertes Verfahren.

Es ergibt sich folgendes:
- Kein zusätzlicher Oberflächenaufbau notwendig, der FST-Eigenschaften beeinflusst.
- Tiefe der Prägung: ca. 40 µm.
- Reinigungseigenschaften analog zu den Eigenschaften des PEI an sich (gut abwaschbar, beständig gegenüber Reinigungsmittel z.B. HoneyBee 90, IsoPropylAlcohol)
- Entfall einer aufwendigen Entfernung der Oberflächen (Nass-/Pulverlack) mittels Strahlverfahren, um ein Monopolymerbauteil für ein nahezu vollständiges Recycling zu erzielen.
- Gewichtseinsparung durch Verzicht auf Leitfüller und konventionellen Füller.

In einer bevorzugten Ausführungsform ist auf eine der Kernlage abgewandte Flachseite der ersten Decklage eine eingefärbte Dekorlage aufgebracht. Alternativ oder zusätzlich ist anstatt einer zusätzlichen eingefärbten Dekorlage die erste und / oder zweite Decklage selbst - insbesondere in Form eines Organosheet - eingefärbt.

Die Decklagen können also auch direkt eingefärbt werden. Damit wird nochmals eine Gewichtsersparnis erzielt und ein zusätzlicher Arbeitsschritt (Aufbringen der Dekorlage) entfällt.

Damit ergibt sich ein recyclebares, thermoplastisches Dekor / Foliendekor. Idee dahinter ist folgende: Um dem Monopolymeransatz zur Erzielung eines nahezu vollständig recyclebaren Linings gerecht zu werden, bedarf es neben Pulver- und Nasslack neuen Oberflächenkonzepten. Dabei wird sowohl das Rohteil (Sandwich aus Kernlage und den beiden Decklagen) als auch die Oberfläche aus dem gleichen Polymer abgebildet. Bei der Herstellung eines thermoplastischen Bauteils kann bereits im Umformprozess eine eingefärbte thermoplastische Folie aufgebracht werden, die sich bei Erreichen der Schmelztemperatur mit dem Bauteilsubstrat (Organosheetdecklage / erste Decklage) verbindet.

Aus der Praxis ist es bekannt, im Lining Oberflächen über Dekorfolien oder Nasslack abzubilden. Eingefärbte thermoplastische Folien sind am Markt frei verfügbar. Als Verweis auf bekannte / ähnliche Anwendungen ist zu sagen: Das Aufbringen von Folien (Tedlar) während des Heißpressens ist ein etabliertes Produktionsverfahren, um eine Oberfläche von Bin-Housings (Bin, auch OHSC: Overhead Storage Compartment) abzubilden. Anstelle von Tedlar (PVF, Polyvinylfluorid) wird hier eine thermoplastische Folie aufgebracht.

Es ergeben sich folgende Eigenschaften:
- Kein zusätzlicher Oberflächenaufbau notwendig, der FST-Eigenschaften beeinflusst.
- Dicke der Folie: ca. 25 - 100 µm
- Reinigungseigenschaften analog zu den Eigenschaften des PEI an sich (gut abwaschbar, beständig gegenüber Reinigungsmittel z.B. HoneyBee 90, IsoPropylAlcohol)
- Entfall einer Aufwendigen Entfernung der Oberflächen (Nass-/Pulverlack) mittels Strahlverfahren, um ein Monopolymerbauteil für ein nahezu vollständiges Recycling zu erzielen.
- Gewichtseinsparung durch Verzicht auf Leitfüller und konventionellen Füller.

In einer Variante dieser Ausführungsform ist die Dekorlage auf die erste Decklage dadurch aufgebracht, dass diese aufgespritzt ist. Insbesondere ist diese mit Hilfe des Kaltgasspritzens aufgebracht. So kann die Dekorlage besonders einfach und effektiv aufgebracht werden.

In einer bevorzugten Ausführungsform ist die Kernlage dadurch gebildet, dass die Kernelemente nicht flächendeckend angeordnet sind. So entsteht bzw. existiert wenigstens ein Leerbereich in der Kernlage, ohne Kernelement, d.h. ein Leerbereich, in dem kein Kernelement in der Kernlage vorhanden ist. Insbesondere wird dies dadurch erreicht, dass die Kernlage zwei oder mehr Kernelemente enthält. Zwei benachbarte Kernelemente weisen einen Abstand zwischen sich auf, um einen der Leerbereiche zu bilden. Denkbar ist jedoch zum Beispiel auch eine Aussparung / Lücke / Leerbereich innerhalb eines einzigen Kernelements.

Gemäß dieser Ausführungsform ergibt sich ein partiell monolithisches Sandwichpaneel. Die Idee dahinter ist: Das Sandwichpaneel wird in der Bauweise angepasst. Die Idee widmet sich dem Reduzieren der Wabe in einem Sandwichpaneel. Das Reduzieren erfolgt, indem die Wabe an bestimmten Positionen im Sandwichpaneel weggelassen wird und durch einen monolithischen Aufbau (Decklage liegt auf Decklage ohne Zwischenlage eines Kernelements / Wabenkerns) ersetzt wird. Dabei können reduzierte Wabenbereiche z.B. eine Rundung abbilden oder einen Kantenabschluss darstellen.

Ein aus der Praxis bekanntes Sandwichpaneel besteht in der Regel aus Decklagen und Kern. Der Kern ist über die gesamte Fläche des Sandwichpaneels vorhanden. In der Regel ist die Dicke des Kernes konstant. In Sonderfällen kann diese Dicke über die Fläche variieren. Bekannte / ähnliche Anwendungen sind z.B. Seitenwände mit offener Wabe auf der Strukturseite.

Die Herstellung erfolgt wie folgt: Eine Schutzfolie (z.B. Tedlar) wird zuerst auf eine Unterpressenplatte gelegt. Danach folgt die untere Prepreglage (zweite Decklage), dann die z.B. mehrteilige Wabe (Kernelemente mit Abstand zueinander, in dem der Leerbereich entsteht) und am Ende die obere Prepreglage (erste Decklage). Ein zerlegbarer Rahmen wird um das Paket positioniert. Er verhindert beim Pressen das Verschieben der Wabe nach außen und hält das Paket in Position. Anschließend folgt das Platzieren eines Einlegers in den Leerbereich. Der Einleger kann aus Aluminium, Stahl oder aus einem steifen Sandwich bestehen.

Diese Herstellung ist aus der Praxis bekannt mit Prepregs (Duroplastischen Systemen). Dies kann auf eine Bauweise mit Thermoplasten und Organosheets als Decklagen übertragen werden. Die "Prepreglage" müsste dabei durch eine "Organosheetlage" getauscht und die Schutzfolie (Tedlar) gegen ein thermoplastisches Dekor / eine thermoplastische Folie ersetzt werden.

Somit lässt sich die aus der Praxis bekannte Duroplastbauweise auf eine thermoplastische Bauweise übertragen.

Es ergibt sich
- ein gezielter Einsatz der Wabe (Kernelement(e)) im Sandwichpaneel
- Reduzierung des Gewichts und der Kosten durch reduzierten und gezielten Einsatz der Wabe (Kernelement(e))
- Ermöglichen des händischen Biegens des Sandwichpaneels im Bereich der Leerstelle.

Die Aufgabe der Erfindung wird auch gelöst durch eine Bauteilanordnung gemäß Patentanspruch 11. Die Bauteilanordnung enthält das erfindungsgemäße Sandwich-Bauteil, wie es oben beschrieben wurde. Die Bauteilanordnung enthält außerdem wenigstens ein Anbauteil. Das Anbauteil enthält das Grundpolymer. Es enthält das Polymer zumindest zu dem Zweck, um eine Verbindung mit dem Sandwich-Bauteil zu ermöglichen Beziehung setze zu bewirken.

Die Bauteilanordnung und zumindest ein Teil deren möglicher Ausführungsformen sowie die jeweiligen Vorteile wurden sinngemäß bereits im Zusammenhang mit dem erfindungsgemäßen Sandwich-Bauteil erläutert. Insbesondere bilden also die oben im Zusammenhang mit dem Sandwich-Bauteil genannten bevorzugten Ausführungsformen auch bevorzugte Ausführungsformen der Bauteilanordnung.

Insbesondere ist das Anbauteil vollständig aus dem Grundpolymer gefertigt. Die Verbindung mit dem Sandwichbauteil basiert dann auf folgender Idee: Die Anbindung des Anbauteils am Sandwich erfolgt insbesondere durch Ultraschallschweißen. Um dem Monopolymeransatz gerecht zu werden bedarf es klebstofffreier Fügeverfahren. Hierbei kommt insbesondere das Ultraschallschweißen in Frage. Um eine - zu aus der Praxis bekannten Anbindungen - vergleichbare Verbindung zu erzielen, bedarf es einer Anpassung der bisherigen aus der Praxis bekannten Anbauteilen, z.B. in Form von Brackets. Die Brackets sind dabei insbesondere mit Energierichtungsgebern versehen, so dass diese während der Ultraschallbewegung aufschmelzen und eine stoffschlüssige Verbindung zwischen Anbauteil (Energierichtungsgebern) und Sandwichbauteil ergeben. Z.B. wird ein Bracket auf seiner Rückseite mit Energierichtungsgeber versehen. Diese bestehen aus dem gleichen Bracketmaterial (z.B. PEI). Beim Ultraschallschweißen werden Energiedirektoren eingesetzt, um die Wärmeerzeugung an der Grenzfläche zwischen den zu verbindenden Teilen zu fördern. Durch die dreieckige Form (Querschnitt durch die linienhaften Energierichtungsgeber) wird eine gezielte und konzentrierte Energieeinleitung erreicht, die das Material zu schmelzen bringt. Da die Decklage des Sandwich, an der das Anbauteil angebracht wird, aus Glasfaser und Grundpolymer (z.B. PEI) besteht, entsteht eine komplette Ankopplung.

Um die Anbindung zwischen Sandwich und Anbauteil (z.B. Bracket) zu optimieren können verschiedene Anordnungen der Energierichtungsgeber genutzt werden. Denkbar sind z.B. Längsstreifen, Schrägstreifen, gekreuzte Streifen, Streifen nach Art eines Fischgrätmusters usw. Die Einstellparameter (Schweißweg in mm, Amplitude in % und Druckkraft in N) der Ultraschallschweißanlage werden insbesondere auf das jeweilige Anbauteil (z.B. Bracket) abgestimmt.

In der Praxis ist es bekannt, Anbauteile, z.B. Brackets, bei duroplastischem Sandwich in die Presse einzulegen und mit dem Rohteil mitzupressen. Die restlichen Halter werden dann händisch geklebt. Das Ultraschallschweißen ist aus der Praxis branchenübergreifend hinreichend bekannt.

Gemäß der Erfindung ergibt sich
- Mit Ultraschallschweißen kann ein recyclebares thermoplastisches Monopolymer-Innenausstattungbauteil inkl. Anbauteilen realisiert werden.
- Verzicht auf Kleber und damit Gewichtseinsparung.
- Die Lösung ermöglicht das Fügen von Anbauteilen (Brackets) auf ein thermoplastisches Sandwich
- Sofortige Aushärtung der Fügeverbindung

Denkbar ist auch die Nutzung eines Reibschweißverfahrens, um Anbauteile am Sandwichbauteil anzubringen. Z.B. können Inserts per Reibschweißen in das Sandwichbauteil eingebracht werden. Insbesondere lassen sich so Eckverbindungen realisieren, in dem Inserts in übergroße Sandwichbauteile eingebracht werden, die Sandwichbauteile anschließend so beschnitten werden, dass das eingebrachte Insert teilweise mit entfernt wird. Eine Schraube durchsetzt dann die Reibinserts, die in zwei unterschiedliche Sandwichbauteile eingebracht wurden, um durch Verbindung der beiden Reibinserts die gesamten Sandwichbauteile miteinander (lösbar) zu verbinden. Das Material (Grundpolymer, z.B. PEI) eines solchen Eckverbinders (z.B. Reibinsert) entspricht dann dem Material des Sandwichbauteils.
- Bei Monomaterial TP-Sandwich (TP: Thermoplast) ist ein Anbauteil Insert aus demselben TP Material bevorzugt
- Dies ergibt Stoff- und Formschluss zwischen Sandwichmaterialien (Decklage und Kern / Kernelement) und TP-Schmelze des Anbauteils / Inserts
- Hier ist eine Rezyklierbarkeit durch TP Monomaterial erleichtert
- Die lösbare Verbindung bei der Nutzung von Schrauben und Reibschweißinserts ersetzt die stoffschlüssige Klebeverbindung und gewährleistet die Zerlegbarkeit des Produkts (Kombination der verbundenen Sandwichbauteile, z.B. TP-Bin / OHSC) für eine nachträgliche Wiederverwertbarkeit.

Hintergrund ist folgender: Das primäre Ziel bei der Umsetzung einer thermoplastischen Bauteilanordnung (z.B. Bin / OHSC) liegt in der Recyclingfähigkeit. Daher ist es bei der Wahl der Fügeverbindungen elementar, dass die Fügemethode nicht die Recyclingfähigkeit behindert. Somit scheiden klassische Klebeverbindungen über Reaktivklebstoffe aus, da diese auf einer anderen Polymerbasis als die für den OHSC eingesetzten Thermoplastmatrizen (Grundpolymer) beruhen.

Es gibt zwei bevorzugte Fügeverfahren:
- Schweißprozesse
- Mechanisch lösbare Verbindungen

Weiter Anforderungen an die Fügelösung:
- Ausreichende mechanische Stabilität, um die hohen Dimensionierungslasten zu ertragen.
- Effiziente Prozessführung.
- Form- und Lagetoleranzen müssen ausgeglichen werden können.

Für thermische Schweißverfahren müssen bei den eingesetzten Hochleistungsthermoplasten verhältnismäßig hohe Prozesstemperaturen zwischen 250°C und 400°C gefahren werden. Dies birgt das Risiko thermischer Spannungen und von Verzügen. Zudem ist eine Temperaturüberwachung zur Prozesskontrolle und zur Verhinderung von lokalen Überhitzungen oder von kalten Schweißstellen denkbar.

Weiterhin ergeben sich für das Gepäckfach zwei unterschiedliche Einsatzbereiche der Fügeverbindungen:
- Fügen der Brackets
   Hier muss ein Kunststoff- oder Aluminiumbracket mit einer Sandwichstruktur (z.B. derjenigen eines OHSC, also z.B. mehrere verbundene oder zu verbindende Sandwichbauteile) verbunden werden. Je nach mechanischer Beanspruchung erfolgt die Anbindung dabei an eine Decklage oder wird direkt in die Sandwichstruktur eingeleitet (Anbindung an die Kernlage / Kernelemente).
   Mögliche Fügeverfahren:
      - Ultraschallschweißen
      - Laserschweißen
      - Siegelschweißen
      - Mechanische Verbindung über in das Sandwich eingebettete Reibschweißinserts und Schrauben
- Fügen der Einzelpaneele (Sandwichbauteile) zu einem Kombinationsbauteil, z.B. einem Korpus des OHSC
   Hier werden mehrerer Sandwichpaneele (Sandwichbauteile) gefügt, um z.B. den Korpus des Gepäckfaches (OHSC) zu formen. Somit ergeben sich verhältnismäßig lange Fügezonen. Zudem müssen hier Toleranzen durch Verzug und Fräsgenauigkeit ausgeglichen werden.
   Mögliche Fügeverfahren:
      - Siegelschweißen
      - Mechanische Verbindung über in das Sandwich eingebettete Reibschweißinserts und Schrauben

Die Aufgabe wird auch gelöst durch ein Verfahren nach Anspruch 12.

In einer ersten Alternative des Verfahrens (Variante "a") werden die beiden Decklagen und die Kernlage (also die Kernelemente / "Waben") in einer Kaschieranlage oder einer Doppelbandpresse miteinander verbunden. Diese Alternative eignet sich insbesondere für zweidimensionale Bauteile, also sich ausschließlich eben flächig erstreckende Bauteile. Die Kaschieranlage kommt dabei nur dann zum Einsatz, wenn die Decklagen mit Hilfe eines Klebfilms (hier dem thermoplastischen Film (TP-Film) / Klebevlies) verbunden werden, ansonsten (ohne Zwischenlage des thermoplastischen Films oder Klebevlieses) kommt die Doppelbandpresse zum Einsatz.

In einer zweiten Alternative des Verfahrens (Variante "b") werden die beiden Decklagen in einer Thermoformanlage mit einem Abstand zueinander auf eine bzw. die Schmelztemperatur (des tatsächlich verwendeten Grundpolymers) aufgeheizt, wobei die Kernlage (also die Kernelemente / "Wabe") auf der zweiten (also unteren) Decklage aufliegt und nach Erreichen der Schmelztemperatur die beiden Decklagen und die Kernlage (als noch voneinander separierten Materialien) in einem Werkzeug zu einem dreidimensionalen Bauteil umgeformt werden, wobei sich vor Abkühlen unter die Glasübergangstemperatur die beiden Decklagen und die Kernlage ( also alle drei Komponenten: erste Decklage oben, Kernlage / Kernelemente / "Wabe", zweite Decklage unten) in einem nahezu schmelzflüssigen Zustand befinden, so dass eine Verbindung rein über die Schmelze (des Grundpolymers) erfolgen kann. Diese Variante wird genutzt, um "dreidimensionale", also sich nicht ausschließlich eben flächig erstreckende Bauteile zu fertigen.

Gemäß der Verfahrensvariante "a" ergibt sich ein (insbesondere PEI-) Sandwichbauteil ohne Klebefilm. Idee dahinter ist folgende: Bei der aus der Praxis bekannten Herstellung von thermoplastischen Halbzeugen (Sandwich) besteht die Herausforderung, die Decklagen an die Kernlage ("Wabe") anzubinden. Dies wird ausschließlich über einen Klebefilm zwischen Decklagen und Kernlage ("Wabe") realisiert. Dadurch entsteht jedoch ein zusätzlicher Gewichtseintrag und der Umstand, dass das Produkt nicht vollständig recyclebar ist. Das Bauteil wäre also recyclebar, wenn eine thermoplastische Folie verwendet werden würde (gleiches Polymer). Bei einem Klebefilm wäre es nicht vollständig recyclebar. Jedoch erfolgt bei beiden Varianten stets ein Gewichtseintrag, welcher nicht gewünscht ist. Um jedoch sowohl Gewichtseinsparung als auch ein recyclebares Halbzeug zu realisieren, wird auf den Klebefilm verzichtet, wenn diese mit einer Doppelbandpresse, über / unter der Kernlage (dem "Kern") direkt aufgeschmolzen werden. Dies gelingt, in dem die Decklagen kurzfristig so aufgeschmolzen werden, ohne die thermoplastische Kernelemente ("Waben", z.B. PEI) zu degradieren und gleichzeitig eine gute Anbindung zwischen Wabe und Decklage zu realisieren. So ergibt sich der "nahezu schmelzflüssige Zustand".

Aus der Praxis ist dagegen die Herstellung eines PEI Sandwich mittels Klebfilm (z.B. Bostik PE120 40g/m²) zur Anbindung der beiden Decklagen an die Kernlage ("Wabe") bekannt.

Dank der Erfindung ergibt sich die Eigenschaft, dass eine Dicke abhängig von der Wabendicke beliebig eingestellt werden kann.
- Bei der Herstellung kann auf einen Klebefilm verzichtet werden, so dass ein vollstandig recyclebares Monopolymer entsteht.
- Es ergibt sich eine Gewichtsreduktion bei einem 32kg Kern gegenüber einer Klebfilmbauweise um 20%.

Wie oben erläutert werden in Variante a) also wenigstens eine der beiden, insbesondere die beiden Decklagen und die Kernlage (Kernelemente / "Waben") über einen thermoplastischen Film in der Kaschieranlage miteinander verbunden. Der Film enthält oder besteht aus dem gleichen Grundpolymer des restlichen Sandwich-Bauteils, was wiederum dem oben genannten Monopolymeransatz entspricht. Aufgrund seiner Ausprägung als Film wird der thermoplastische Film etwas früher schmelzflüssig als die thermoplastischen Decklagen. Hierdurch wird eine besonders gute Anbindung zwischen Kernlage und der jeweiligen Decklage erreicht.

Eine bevorzugte Ausführungsform des Verfahrens gilt für die oben genannten Ausführungsform des Sandwich-Bauteils, in der in wenigstens einem der faserfrei gehaltenen Bereiche das Kernelement bis auf eine Restschicht ausgespart ist. Im Verfahren wird dann wenigstens einer der faserfrei gehaltenen Bereiche dadurch (in dem Sandwich-Bauteil bzw. der Kernlage bzw. dem Kernelement) ausgespart, dass dort eine lokale Ausfräsung des bis dahin noch vorhandenen Kernelements vorgenommen wird, bis nur noch die Restschicht vorhanden ist. Die Vorteile wurden bereits oben im Zusammenhang mit dem Sandwich-Bauteil erläutert.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Die Erfindung liefert Bauweisen und Technologien für recyclebare Bauteile in der Flugzeugkabine. Dabei steht neben der Recyclebarkeit ein gesunder Mix zwischen Kosten, Bauteilgewicht und dem Abbilden hoher Stückzahlen im Vordergrund.

In der bekannten Praxis kommen zur Herstellung von Kabinenbauteilen glasfaserverstärkte Sandwichbauteile mit einer duroplastischen Matrix zum Einsatz. Duroplaste können nur zu einem sehr geringen Umfang und unter hohen Aufwänden recycelt werden. Aus industriellen Anwendungen (z.B. Armaturenbrettträger, Dächer im Nutzfahrzeugbereich, Solarpaneele) sind in der Praxis thermoplastische Bauweisen bekannt, welche jedoch ein anderes Anforderungsspektrum (z.B. Brand, Gewicht- zu Steifigkeitsverhältnis, Temperaturbedingungen) aufweisen. Das Kernmaterial kann dabei ein thermoplastischer Schaum oder eine thermoplastische Wabe sein. Die Decklagen sind dabei über einen Klebfilm verklebt.

Gemäß der Erfindung ergeben sich folgende Bauweisen:
Die Bauweise des thermoplastische Monopolymer-Innenausstattungsbauteils kann neben einer Grundbauweise (zwei vollflächig faserverstärkte Decklagen und durchgehendes Kernelement als Kernlage) zur Gewichtseinsparung wie folgt variiert werden:
- Partielle Belegung (Fasertapes und faserfreie Bereiche) mit ausgeräumtem Kern (Aussparung des Kernelements bis auf eine Restschicht)
- Verwendung von ultraleichten Decklagen (kreuzweise Anordnung von Gewebestreifen und faserfreie Bereiche)
- Partiell monolithische Bauweise (nicht flächendeckende Kernelemente und Leerbereiche)
- Belegung mit Taylored Blanks

Der Einsatz von Verbindungselementen ist möglich. Anbauteile und Verbindungselemente können über die folgenden Methoden angebunden bzw. realisiert werden:
- Ultraschallschweißen
- Reibschweißen

Die Oberfläche der Bauteile kann klassisch über Nass-/Pulverlack oder ein Dekor realisiert werden. Im Rahmen des Monopolymeransatzes ergeben sich jedoch folgende Lösungen:
- Recyclebares, aufgespritztes (insbesondere Kaltgasspritzen), thermoplastisches Dekor (Dekorlage, auf einer Flachseite der ersten Deckschicht / Decklage angeordnet).
- Recyclebares, thermoplastisch geprägtes Dekor (Grundpolymer der ersten Deckschicht / Decklage mit an einer Flachseite.
- Recyclebares, thermoplastisches Foliendekor (Dekorfolie auf Flachseite der ersten Deckschicht / Decklage).

In Bezug auf das Halbzeug gilt:
Die oben genannte Alternative a) des Herstellungsverfahrens zur Herstellung eines zweidimensionalen (rein flächigen) Sandwichbauteils kann, um weiteres Gewicht einzusparen auch kontinuierlich ohne den Einsatz eines thermoplastischen Films realisiert werden: So ergibt sich ein "kontinuierliches PEI Sandwich ohne Klebefilm".

Die Bauteile bzw. Bauteilanordnungen können insbesondere eingesetzt werden, um einen "Bin" (OHSC), eine Seitenwand sowie weitere Kabinenverkleidungsbauteile zu realisieren.

Gemäß der Erfindung ergibt sich also ein TP-Monopolymerinnenausstattungsbauteil (TP: Thermoplast). Dieses kann folgende Ausprägungen annehmen:
- Oberfläche:
   ∘ Recyclebares, aufgespritztes thermoplastisches Dekor (Kaltgasspritzen), Technologie einsetzbar insbesondere im OHSC und in der Seitenwand
   ∘ Recyclebares geprägtes thermoplastisches Dekor, Technologie einsetzbar insbesondere im OHSC und in der Seitenwand
   ∘ Recyclebares thermoplastisches Foliendekor, Technologie einsetzbar insbesondere im OHSC und in der Seitenwand,
- Bauweise:
   ∘ Partiell belegtes thermoplastisches Seitenwandbauteil, Technologie einsetzbar insbesondere in der Seitenwand,
   ∘ Recyclebares thermoplastisches Seitenwandbauteil in Leichtbauweise, Technologie einsetzbar insbesondere im OHSC und in der Seitenwand
   ∘ Partiell monolithisches Sandwichpaneel, Technologie einsetzbar insbesondere im Thermoplast OHSC,
   ∘ Taylored Blank belegtes thermoplastisches Seitenwandbauteil, Technologie insbesondere einsetzbar in der Seitenwand,
- Verbindungselemente:
   ∘ Ultraschallschweißen (Bracket ultrasonic welding), Technologie einsetzbar insbesondere im OHSC und in der Seitenwand,
   ∘ Reibschweißen, Technologie einsetzbar insbesondere im OHSC und in der Seitenwand,
- Halbzeug:
   o PEI Sandwich ohne Klebefilm, Technologie einsetzbar insbesondere im Thermoplast OHSC.

Insbesondere kann das Bauteil in einer TP-Seitenwand eingesetzt werden. Es ergibt sich eine konkurrenzfähigen Technologie zur Herstellung von 3D-TP-Bauteilen, um den zukünftigen Anforderungen im Hinblick auf Recyclebarkeit, hohe Stückzahlen, Gewicht und Abfallreduktion gerecht zu werden. In Bezug auf ein Screening neuer Materialien ergeben sich verbesserte Verarbeitungsmöglichkeiten und neue Oberflächenkonzepte.

In Bezug auf einen TP-"Bin" ergibt sich ein Verzicht auf verklebte Komponenten, Gewichtsneutralität bzw. leichte Gewichtsreduktion gegenüber vergleichbaren duroplastischen Innenausstattungsbauteilen in Sandwichbauweise und ein hoher Recyclinggrad. Dies gilt auch für eine TP-Seitenwand.

In Bezug auf eine TP-Seitenwand und einen TP-"Bin" ergibt sich:
- In Variante a) des Herstellungsverfahrens für 2D-Bauteile (ausschließlich flächig erstreckend): Das Sandwich (Kernlage / Kernelemente und beide Decklagen) wird in einer Kaschiermaschine / -anlage erhitzt, bis insbesondere der TP-Film die Schmelztemperatur erreicht. Wurde die Schmelztemperatur erreicht, wird das Sandwich-Bauteil in einer Kühlzone abgekühlt, so dass eine Verbindung zwischen Wabe (Kernlage / Kernelemente) und beiden Decklagen, insbesondere über den thermoplastischen Film, entsteht.
- In Variante b) des Herstellungsverfahrens für 3D-Bauteile (nicht ausschließlich flächig erstreckend): Der separierte Lagenaufbau (Kernlage / Kernelemente und beide Decklagen) wird erhitzt bis die Schmelztemperatur erreicht wird. Wurde die Schmelztemperatur erreicht, wird das Sandwich-Bauteil unter Druck in einem Werkzeug mit einer Temperatur unter dem Glasübergang umgeformt.

Z.B. für einen TP-Bin ergibt sich der Einsatz von recyclefähigem Material und ein nachhaltiges Produkt.

Weitere Merkmale, Wirkungen und Vorteile der Erfindung ergeben sich aus der nachfolgenden Beschreibung eines bevorzugten Ausführungsbeispiels der Erfindung sowie den beigefügten Figuren. Dabei zeigen, jeweils in einer schematischen Prinzipskizze:
- Figur 1a: ein 3D-Sandwich-Bauteil in Form einer Seitenwand in perspektivischer Seitenansicht, und
- Figur 1b: im Schnitt,
- Figur 2a: die Herstellung eines 2D-Sandwich-Bauteils nach Alternative a) eines Herstellungsverfahrens, und
- Figur 2b: eines 3D-Sandwich-Bauteils nach Alternative b) des Herstellungsverfahrens, jeweils im Schnitt,
- Figur 3a: ein OHSC ("Bin") in perspektivischer Ansicht mit geöffneter Klappe, und
- Figur 3b: den Schnitt durch die einzelnen Sandwichbauteile des OHSC,
- Figur 4: das Kaltgasspritzen eines thermoplastischen Dekors,
- Figur 5a: das Herstellen eines geprägten thermoplastischen Dekors nach Variante a), und
- Figur 5b: nach Variante b) des Herstellungsverfahrens,
- Figur 6a: ein partiell belegtes thermoplastisches Seitenwandbauteil mit bis auf eine Restschicht ausgespartem Kernelement in perspektivischer Ansicht und,
- Figur 6b: im Schnitt,
- Figur 7a: eine Decklage eines recyclebaren thermoplastisches Seitenwandbauteil in Leichtbauweise in Draufsicht, und
- Figur 7b: einen Schnitt durch das Seitenwandbauteil in Leichtbauweise,
- Figur 8a: ein herkömmliches, und
- Figur 8b: ein partiell monolithisches Sandwichbauteil,
- Figur 8c: geformt als Bauteil mit Rundung, und
- Figur 8d: genutzt als Kantenabschluss, und
- Figur 8e: die Herstellung des partiell monolithischen Sandwichbauteils nach Alternative b) des Herstellungsverfahrens,
- Figur 9: die Herstellung eines Bins (OHSC) mit unter anderem dem partiell monolithischen Sandwichbauteil,
- Figur 10a: ein Taylored Blank einer Decklage in Draufsicht,
- Figur 10b: einen Umformprozess und den sich ergebenden Lagenaufbau mit dem taylored Blank für eine Kombination von Organosheet mit UD-Gelege (UD: unidirectional tape), und
- Figur 10c: für eine monolithische Bauweise,
- Figur 11a: ein Anbauteil in Form eines herkömmlichen Brackets, und
- Figur 11b: in Form eines Brackets mit Energierichtungsgebern,
- Figur 11c: drei alternative Brackets mit alternativen Energierichtungsgebern,
- Figur 11d: drei nochmals alternative Brackets mit alternativen Energierichtungsgebern,
- Figur 11e: eine Bauteilanordnung mit alternativem, auf ein Sandwichbauteil aufgeschweißtem Bracket und Ultraschallschweißkopf,
- Figur 12a: ein Sandwichbauteil mit reibgeschweißtem Anbauteil im Schnitt,
- Figur 12b: zwei Sandwichbauteile nach Figur 12a, durch Schrauben aneinander befestigt, in perspektivischer Darstellung,
- Figur 12c: eine der Schraubverbindungen aus Figur 12b im Detail,
- Figur 13: Alternative a) des Herstellungsverfahrens ohne thermoplastischen Film,
- Figur 14a: das Fügen eines Anbauteils an eine Decklage, und
- Figur 14b: in die Kernlage eines Sandwichbauteils, und
- Figur 14c: das Fügen von zwei Sandwichbauteilen aneinander.

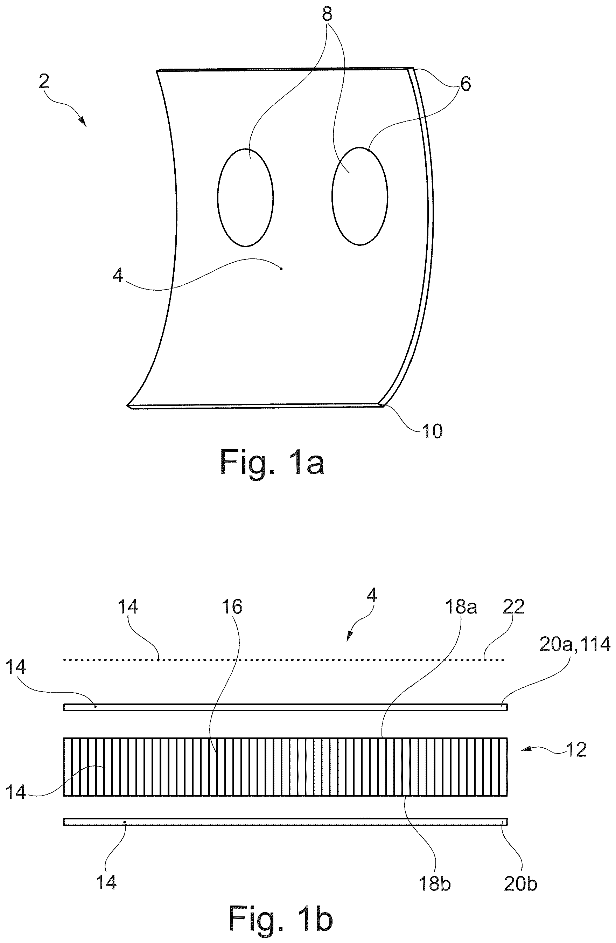

Figur 1a zeigt ein Sandwich-Bauteil 2, hier ein 3-D Bauteil, also ein sich nicht rein flächig erstreckendes Bauteil. Das Sandwich-Bauteil 2 ist hier eine Seitenwand für bzw. zur Innenausstattung einer nicht dargestellten Passagierkabine eines nicht dargestellten Passagierflugzeuges. Das Sandwich Bauteil 2 weist eine Oberfläche 4 auf, sowie Anbauteile 6 in Form von Verbindungselementen für weitere Komponenten, hier zur Verbindung des Sandwich-Bauteils 2 mit der nicht dargestellten Grundstruktur des Passagierflugzeuges und mit zwei nicht dargestellten Fensteranordnungen, die in zwei entsprechenden Aussparungen 8 in der Seitenwand einzusetzen sind.

Das Sandwich-Bauteil 2 weist einen Lagenaufbau 10 auf
In Figur 1b ist dieser symbolisch dargestellt. Somit zeigt Figur 1b symbolisch einen Schnitt durch das Sandwich-Bauteil 2 quer zu dessen flächiger Erstreckungsrichtung.

Das Sandwich-Bauteil 2 enthält eine Kernlage 12, die sich wie in Figur 1a gezeigt, flächig erstreckt, jedoch nicht eben, sondern gekrümmt bzw. leicht gebogen erstreckt, um der Rumpfform des Passagierflugzeuges zu folgen. Daher weist das gesamte Sandwich-Bauteil 2 die 3-D Form auf. Die Kernlage 12 enthält ein Kernelement 16 in Form eines Wabenkerns und ein Polymer in Form eines Grundpolymers 14. Die Kernlage 12 weist eine erste Flachseite 18a und eine zweite Flachseite 18b auf.

Das Sandwich-Bauteil 2 enthält außerdem eine faserverstärkte erste Decklage 20a, die neben der Faserverstärkung ebenfalls das Grundpolymer 14 enthält. Die erste Decklage 20a ist an der ersten Flachseite 18a der Kernlage 12 angeordnet.

Das Sandwich-Bauteil 2 enthält außerdem eine zweite Decklage 20b, die ebenfalls faserverstärkt ist und das Polymer 14 enthält. Die zweite Decklage 20b ist an der zweiten Flachseite 18b der Kernlage 12 angeordnet.

Zusätzlich enthält das Sandwich Bauteil 2 an der Oberfläche 4 noch eine TP-Oberfläche 22 (TP: Thermoplast). Die TP-Oberfläche 22 enthält ebenfalls das Grundpolymer, das hier ein Thermoplast, konkret PEI (Polyetherimid) ist.

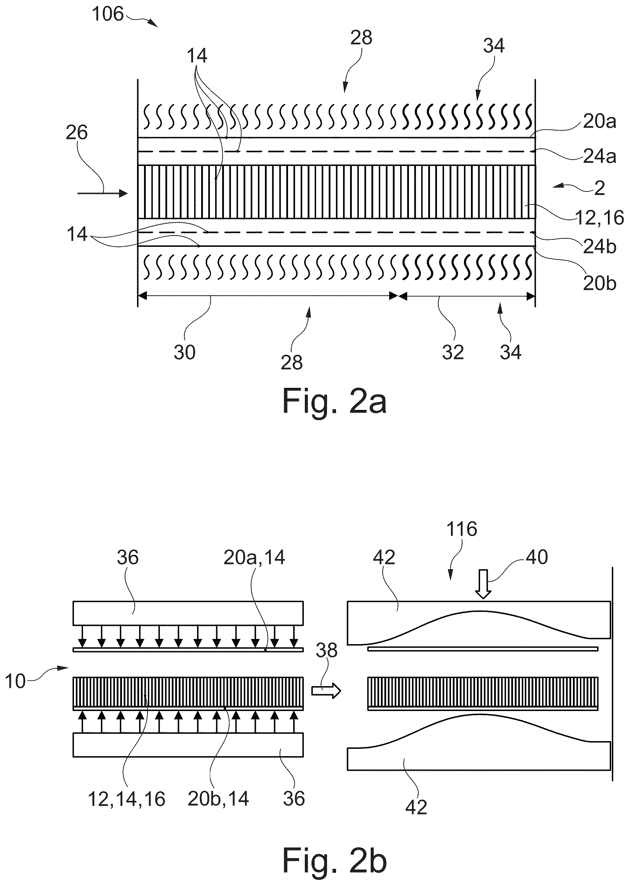

Die TP-Oberfläche 22 ist in Form einer TP-Folie ausgeführt, die zusammen mit den restlichen Komponenten zum Sandwich Bauteil 2 konsolidiert wird. Auch die TP-Oberfläche 22 ist aus dem Grundpolymer 14 gebildet. Bereits im Herstellungsprozess kann hier eine eingefärbte thermoplastische Folie - als eine Dekorlage 114 - als TP Oberfläche 22 genutzt werden, die sich bei Erreichen der Schmelztemperatur (siehe unten, Figuren 2a,b) mit dem Bauteilsubstrat, d.h. der ersten Organosheet-Decklage 20a verbindet. Die TP-Oberfläche22 ist dann ein TP-Foliendekor.

Alternativ (siehe unten) kann die TP-Oberfläche 22 - ähnlich einer Lackierung - in einem nachträglichen Schritt - z.B. per Kaltgasspritzen - als Dekorlage 114 aufgebracht werden. Die TP-Oberfläche 22 ist dann ein TP-aufgespritztes Dekor.

Das Bauteil ist nach einem Monopolymerprinzip aufgebaut. Dies bedeutet, dass sowohl die Kernlage 12 als auch die beiden Decklagen 20a,b und hier auch die TP-Oberfläche 22 aus dem gleichen Polymer in Form eines Grundpolymers 14 aufgebaut sind bzw. dieses enthalten. Die beiden Decklagen 20a,b sind ausschließlich dank des Grundpolymers 14 an der Kernlage 12 befestigt. Die Befestigung erfolgt ohne Zwischenlage einer stofffremden (also nicht dem Grundpolymer entsprechenden bzw. dieses beinhaltenden) Klebeschicht zwischen der jeweiligen ersten und zweiten Decklage 20a,b und der Kernlage 12. Dies gilt ebenso für die Befestigung der TP-Oberfläche 22 an der ersten Decklage 20a.

Das Kernelement 16 ist hier eine unverstärkte TP-"Wabe" (TP: Thermoplast, Grundpolymer 14). Die beiden Decklagen 20a,b sind TP-Organosheets (TP: Grundpolymer 14) und sind jeweils faserverstärkt.

Figur 2a zeigt symbolisch die Herstellung eines alternativen 2D-Sandwich-Bauteils 2, welches zweidimensional, also eben ausgeführt ist, nach einer Variante a) eines Herstellungsverfahrens. Dessen Grundaufbau entspricht dem aus Figur 1a, d.h. die obige Beschreibung gilt hier ebenso. Abweichend ist die TP-Oberfläche 22 hier jedoch nicht vorhanden. Abweichend ist außerdem zwischen der jeweiligen ersten und zweiten Decklage 20a,b und der Kernlage 12 jeweil ein TP-Film 24a,b angeordnet. Dieser ist nicht faserverstärkt, sondern besteht einzig aus dem Grundpolymer 14. Somit ist auch hier im Sandwich-Bauteil ein Monopolymeransatz realisiert, indem sämtliche aneinander zu fügenden Komponenten des Sandwich-Bauteils 2 das gleiche Grundpolymer 14 aufweisen.

Bei der Herstellung des 2D-Sandwich-Bauteils 2 wird in einer Bewegungsrichtung 26 vorgegangen, und zwar wie folgt: das Sandwich-Bauteil 2 wird in einer hier nicht weiter dargestellten Kaschiermaschine bzw. Kaschieranlage 106 erhitzt, bis die beiden TP-Filme 24a,b Schmelztemperatur erreichen. Der Hitzeeintrag 28 erfolgt in einer Heizzone 30 und ist symbolisch durch Schlangenlinien dargestellt. Wurde die Schmelztemperatur erreicht, wird das Sandwich-Bauteil 2 in einer Kühlzone 32 einer Abkühlung 34 (wieder durch Schlangenlinien angedeutet) unterzogen, sodass eine Verbindung zwischen Kernelement 16 und den beiden Decklagen 20a,b über den jeweiligen TP-Film 24a,b entsteht.

Figur 2b zeigt dagegen die Herstellung des 3D-Sandwich-Bauteils, das sich also nicht nur rein flächig, sondern gekrümmt erstreckt, nach einer Variante b) des Herstellungsverfahrens. Der Lagenaufbau entspricht hier dem von Figur 1b, jedoch hier mit dem Unterschied, dass die TP-Oberfläche 22 weggelassen ist.

Gemäß Figur 2b wird der zunächst separierte Lagenaufbau 10 erhitzt, hier mit Hilfe eines Infrarot- also IR-Feldes 36, bis die Schmelztemperatur in allen Komponenten erreicht wird. Wurde die Schmelztemperatur erreicht (Pfeil 38), wird das Sandwich unter Druck 40, ebenfalls dargestellt durch einen Pfeil, in einem Werkzeug 42 mit einer Temperatur unter dem Glasübergang umgeformt. Das Werkzeug 42 und das IR-Feld 36 sind hier Teil einer Thermoformanlage 116.

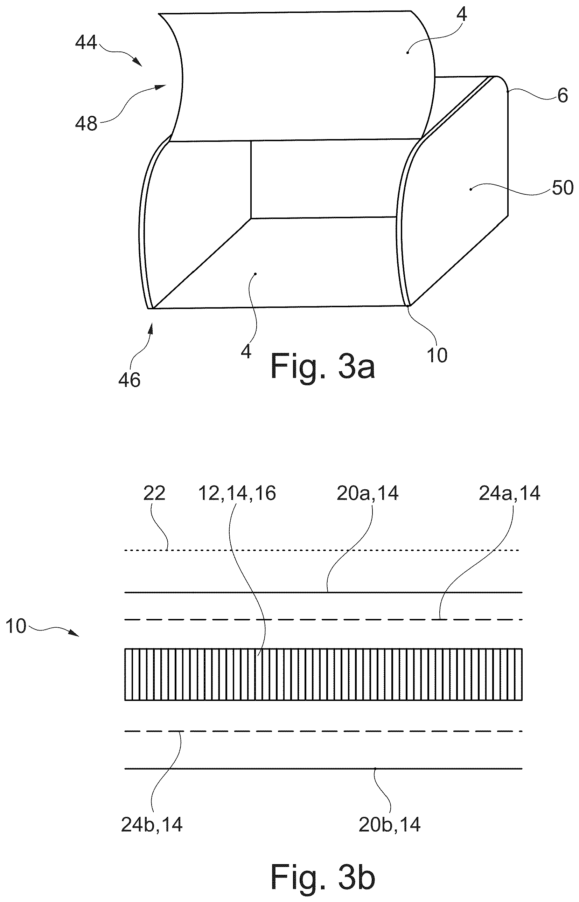

Figur 3a zeigt in perspektivischer Ansicht symbolisch dargestellt einen OHSC 44 (Overhead Storage Compartment), auch "Bin" genannt. Dieser enthält einen feststehenden Korpus 46 und eine relativ zu diesem bewegliche / schwenkbare Klappe 48. Der OHSC 44 weist ebenfalls nicht näher dargestellte Verbindungselemente in Form von Anbauteilen 6 auf, die hier der Montage des OHSC 44 an einer nicht dargestellten Grundstruktur der Passagierkabine bzw. des Passagierflugzeuges dienen.

Der OHSC 44 ist aus Halbzeugen 50 aufgebaut und weist wieder entsprechende Oberflächen 4 auf. Die Halbzeuge weisen wieder einen Lagenaufbau 10 auf.

Dieser ist in Figur 3b dargestellt. Der Lagenaufbau 10 entspricht hier demjenigen aus Figur 2a mit der Abänderung, dass hier im Sandwich-Bauteil 2 zusätzlich wieder eine TP-Oberfläche 22 gemäß Figur 1b vorhanden ist.

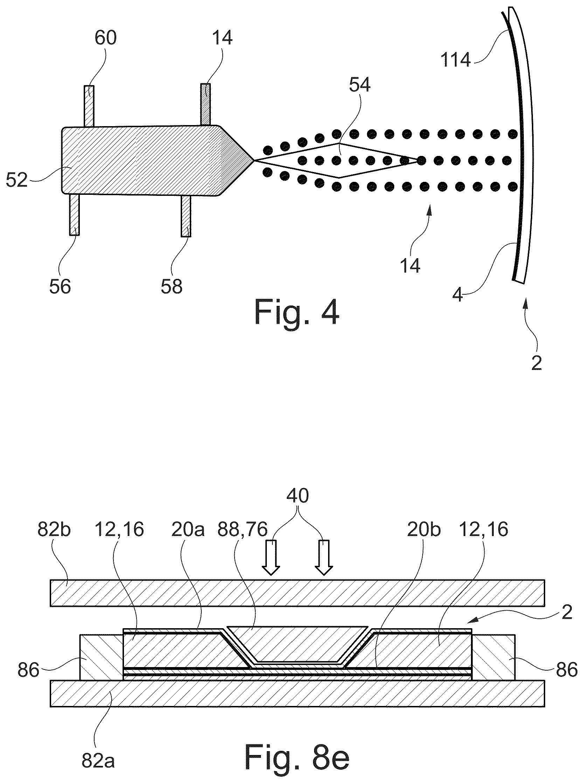

Figur 4 zeigt, wie mithilfe des Kaltgasspritzens Grundpolymer 14 als eine Dekorlage 114 auf die thermoplastische Oberfläche 4 des Sandwich-Bauteils 2 aufgespritzt wird. Dabei schmelzen beim Aufspritzen sowohl die aufgespritztes Polymerpartikel des Grundpolymers 14 als auch das Substrat, also das Grundpolymer 14 an der Oberfläche 4 leicht an, sodass eine gute Haftung erzielt werden kann. Dem Spritzbrenner 52 mit angedeuteter Flamme 54 wird Brennergas 56 sowie Energie 58 und als Spritzwerkstoff das Grundpolymer 14 des Sandwich-Bauteils 2, hier PEI, zugeführt. Weiterhin verfügt der Spritzbrenner 52 über eine Kühlung 60. Bei dem zu bespritzenden Sandwich-Bauteil 2 kann es sich im Beispiel entweder um eine 3-D Seitenwand als Innenverkleidung der Passagierkabine oder eine 2D- oder 3D-Oberfläche des OHSC 44 handeln.

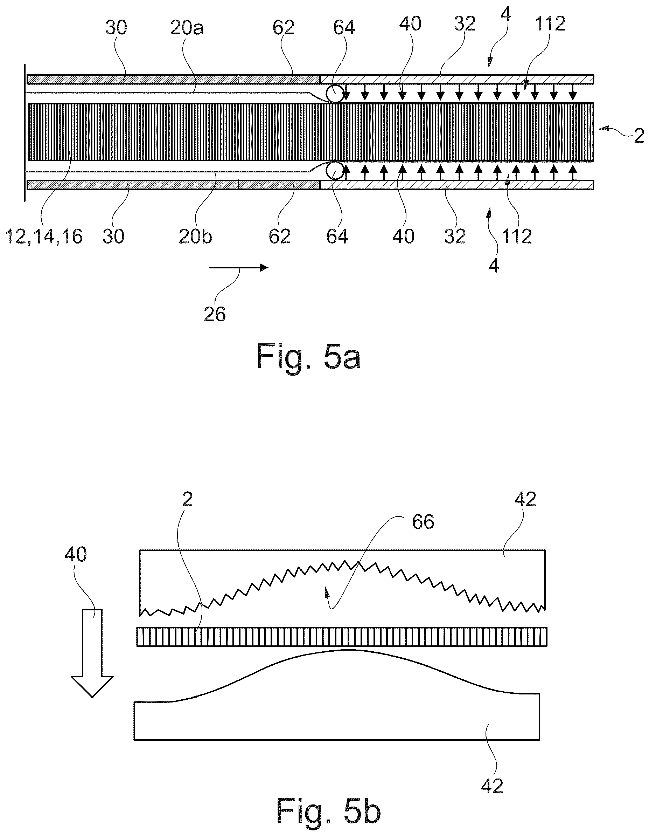

Figur 5a erläutert das Aufbringen eines geprägten thermoplastischen Dekors in Form einer Prägung 112 auf ein 2D-Sandwich-Bauteil 2. Dabei erfolgt wieder eine Bearbeitung in Bewegungsrichtung 26. Das Verfahren erfolgt grundlegend nach der Verfahrensvariante a), jedoch mit zusätzlichem Prägeschritt, wie im folgenden erläutert wird.

In der Heizzone 30 erfolgt das kurzfristige Aufschmelzen der beiden Decklagen 20a,b. Es folgt eine Übergangszone 62 sowie die Kühlzone 32. In der Kühlzone 32 erfolgt ein Abkühlen der Decklage unter leichtem Druck 40, wieder durch Pfeile angedeutet. Die eigentliche Aufbringung des Dekors erfolgt durch zwei Prägewalzen 64. Auch hier wird also das Rohteil in Form des Kernelements 16 und die Oberfläche 4, hier in Form der Decklagen 20a,b aus dem gleichen Grundpolymer 14 gebildet. Zur Herstellung der Organosheets, welche die erste und zweite Decklage 20a,b bilden, wird ein bereits eingefärbtes, gemahlenes Kunstoffgranulat verwendet. Das Konsolidieren der Komponenten (Kernlage 12, Decklagen 20a,b) erfolgt mittels einer Stahlband-Doppelpresse, von der lediglich die Prägewalzen 64 dargestellt sind. Nachdem sich das Grundpolymer 14 im schmelzflüssigen Zustand zur vollständigen Konsolidierung befindet (Ende der Heizzone 30 bzw. Übergangszone 62), durchläuft es die Kühlzone 32. In dieser Zone wird die geprägte Prägewalze 64 eingebracht, die eine Strukturierung auf das Material der Decklagen 20a,b einbringt. Alternativ könnte ein nicht dargestelltes vorgeprägtes Stahlband verwendet werden.

Figur 5b zeigt ein Verfahren grundlegend nach der Verfahrensvariante b), jedoch mit zusätzlichem Prägeschritt, um auch hier eine Prägung 112 auf das Sandwich-Bauteil 2 aufzubringen, wie im folgenden erläutert wird. Dieses wird auf 3D-Sandwich-Bauteile 2 angewendet.

Alternativ zu oben wird hier zum Zweck der Prägung ein geprägtes Werkzeug 42 im Umformprozess gemäß Figur 2b verwendet. Figur 5b zeigt daher ein geprägtes Seitenwand-Werkzeug 42, dessen eine (hier die im Bild obere) Werkzeughälfte eine Prägeform 66 aufweist.

Die Oberfläche des Sandwich-Bauteils 2 stellt dann eine TP-Oberfläche 22 in Form eines TP-geprägten Dekors dar.

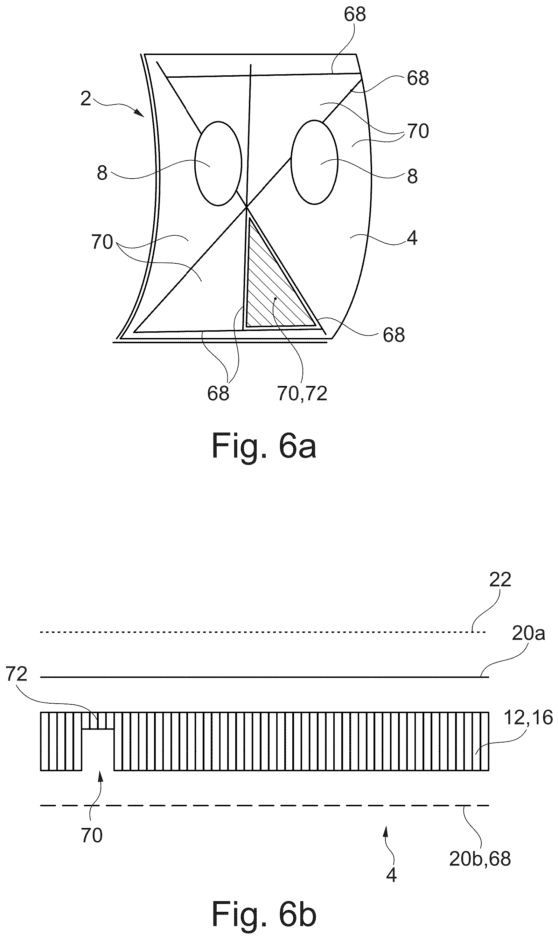

Figur 6a zeigt ein Sandwich-Bauteil 2 in Form eines nur partiell belegten thermoplastischen Seitenwand-Bauteils. Hier ist die Oberfläche 4 nur entlang von Lastpfaden auf der Strukturseite mit Fasertapes 68 in Form von unidirektionalen Tapes, sogenannten UD-Tapes, entlang der Lastpfade belegt. Die übrigen Bereiche 70 der Oberfläche 4 des Sandwich-Bauteils 2, welche nicht mit Fasertapes 68 belegt sind, sind faserfrei gehalten. In den faserfrei gehaltenen Bereichen 70 (exemplarisch nur für einen der Bereiche 70 dargestellt) ist das Kernelement 16 des Sandwich Bauteils 2 bis auf eine Restschicht 72 ausgespart, hier ausgefräst. Mit anderen Worten finden lokale Ausfräsungen in nicht statisch relevanten Bereichen auf der Strukturseite des Sandwich-Bauteils 2 statt.

Figur 6b zeigt - wieder symbolisch - den Lagenaufbau 10 des Sandwich-Bauteils 2 aus Figur 6a. Der Aufbau entspricht demjenigen von Figur 1b, wobei im Unterschied hierzu die zweite Decklage 20b hier nicht als vollflächig über das Sandwich-Bauteil 2 (dessen Flachseite 18b) durchgängiger faserverstärkter Organosheet ausgeführt ist, sondern gemäß Figur 6a ausschließlich durch die lokal verlegten Fasertapes 68. Die zweite Decklage 20b ist daher in Form einer UD-Tape-Verstärkung ausgeführt. Figur 6b zeigt auch symbolisch in einem Bereich 70 die Ausfräsung des Kernelements 16 bis auf die Restschicht 72. Bei der Herstellung werden die Fasertapes 68 in Lastrichtung der Lastpfade des Sandwich Bauteils 2 mittels einer nicht dargestellten Automated-Fiber-Placement-Technologie aufgebracht. Die Bereiche 70, die nichts zur statischen Integrität des Sandwich-Bauteils 2 beitragen können, werden dann auf ein Minimum von 2-3 mm Höhe, nämlich die Restschicht 72, ausgefräst.

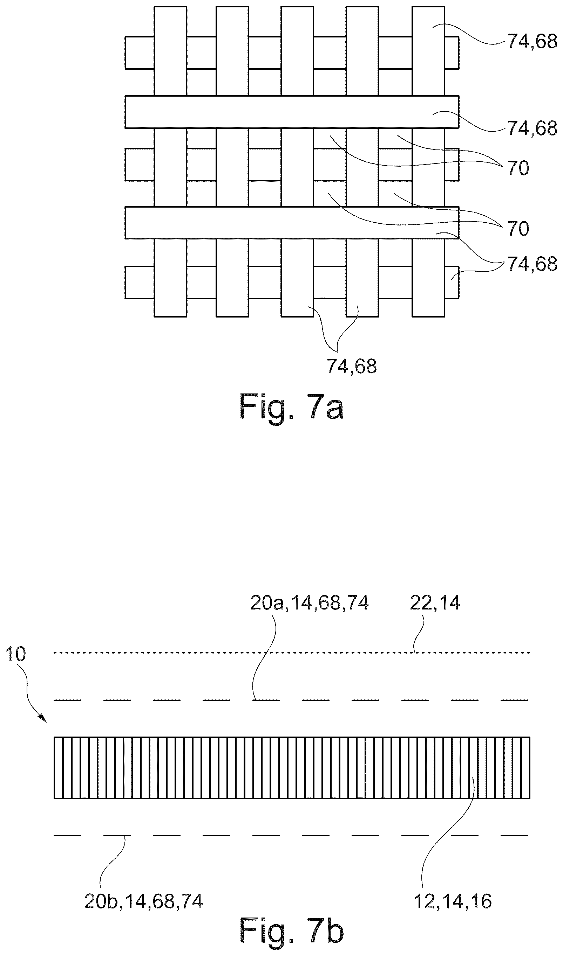

Figur 7a zeigt die kreuzweise Anordnung von unidirektionalen Gewebestreifen 74 in Form der Fasertapes 68 als Faserverstärkung der Decklagen 20a,b. Die Gewebestreifen 74 sind hier glasfaserverstärkte thermoplastische UD-Tapes, die kreuzweise, nämlich in 0° Richtung und 90° Richtung angeordnet sind und wiederum faserfreie Bereiche 70 zwischen sich bilden.

Im Sandwich-Bauteil 2 werden mit anderen Worten anstelle von konventionell gewebten Faserverstärkungen (die sich wie z.B. in Fig. 1b, 2 und 3b in den Decklagen 20a,b vollflächig ohne Freibereiche 70 erstrecken) thermoplastische UD-Tape-Gewebe mit verbessertem Gewichts-Festigkeitsverhältnis aus Glas- oder Kohlenstofffasern verwendet. Die kreuzweise Anordnung erfolgt auf Basis industriell tauglicher Webverfahren.

Figur 7b zeigt den Lagenaufbau 10 eines entsprechend aufgebauten thermoplastischen Seitenwandbauteils in Form des Sandwich-Bauteils 2 in Leichtbauweise. Abweichend vom Aufbau gemäß Figur 1b sind hier beide Decklagen 20a,b als glasfaserverstärkte UD-Tape-Gewebe gemäß Figur 7a ausgeführt.

Auch diese Decklagen 20a,b enthalten wieder das Grundpolymer 14.

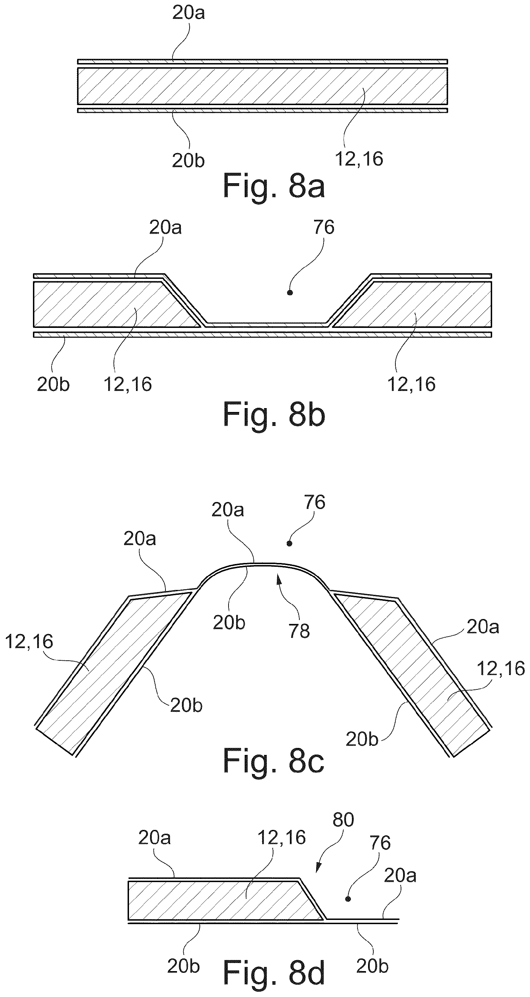

Figur 8 illustriert Aufbau und Herstellung eines partiell monolithischen Sandwich-Bauteils 2 in Form eines Sandwich Paneels.

Figur 8a zeigt zum Vergleich zunächst ein herkömmliches Sandwich Paneel 2 gemäß der bisherigen Figuren 1-7. Dieses weist eine vollflächig über den gesamten flächigen Erstreckungsbereich des Sandwich-Bauteils 2 durchgehende Kernlage 12 bzw. ein einziges durchgehendes Kernelement 16 auf, welches von den beiden Decklagen 20a,b bedeckt ist.

Figur 8b zeigt nun das partiell monolithische Sandwich-Bauteil 2. Hier ist die Kernlage 12 bzw. des Kernelement 16 nicht flächendeckend durchgehend ausgeführt, sondern es ist in der Kernlage 12 ein Leerbereich 76 vorgesehen, an welchem ein "Reduzieren der Wabe", d.h. ein Weglassen des Kernelements 16 erfolgt. Die Kernlage ist hier also mit anderen Worten im Leerbereich 76 nicht vorhanden bzw. ist zu einem Nullelement reduziert. Die beiden Decklagen 20a,b berühren sich also hier bzw. werden lokal ohne Zwischenlage der Kernlage miteinander bzw. aneinander konsolidiert.

Figur 8c illustriert, wie die so entstehenden Leerbereiche eine Rundung 78 des Sandwich-Bauteils 2 darstellen können. Da die stabilisierende Kernlage / Wabe fehlt, ist das Sandwich-Bauteil 2 im Leerbereich 76 flexibel / biegbar, so dass die Rundung z.B. händisch herbeigeführt werden kann, siehe unten.

Figur 8d illustriert dagegen, wie der Rand eines Leerbereiches 76 auch als Kantenabschluss 80 dienen kann. Das an den Leerbereich 76 angrenzende Kernelement 16 kann dazu z.B. abgeschrägt sein, wie hier dargestellt.

Figur 8e erläutert die Herstellung eines entsprechend partiell monolithischen Sandwich Paneels / Sandwich Bauteils 2. Hierbei wird auf eine Unterpressenplatte 82a zunächst eine Schutzfolie 84, hier eine TP-Folie, gelegt. Danach folgt die untere Organosheetlage in Form der zweiten Decklage 20b. Dann die mehrteilige Kernlage 12 bzw. Wabe in Form von zwei voneinander getrennten Kernelementen 16, die in der Lücke zwischen sich den Leerbereich 76 bilden. Anschließend folgt eine obere Organosheetlage in Form der ersten Decklage 20a. Ein zerlegbarer Rahmen 86 wird um das Paket aus den beschriebenen Bauteilen / Komponenten herum positioniert, um das Paket bzw. die Komponenten des zu erstellenden Sandwich-Bauteils 2 in Position zu halten und das Verschieben der Kernelemente 16 / Waben nach außen hin, also weg vom Leerbereich 76, zu verhindern. Anschließend folgt noch das Platzieren eines Einlegers 88, der den Leerbereich 76 einnimmt, also eine Negativform dessen darstellt. Der Einleger 88 kann z.B. aus Aluminium, Stahl oder aus einem steifen Sandwich bestehen. Mithilfe einer Oberpressenplatte 82b wird anschließend wieder Druck 40 in Form einer Presskraft auf die Komponenten das Sandwich-Bauteils 2 ausgeübt, um diese zum Sandwich-Bauteil 2 zu konsolidieren, so dass das Sandwich-Bauteil 2 gemäß Figur 8b entsteht bzw. konsolidiert wird.

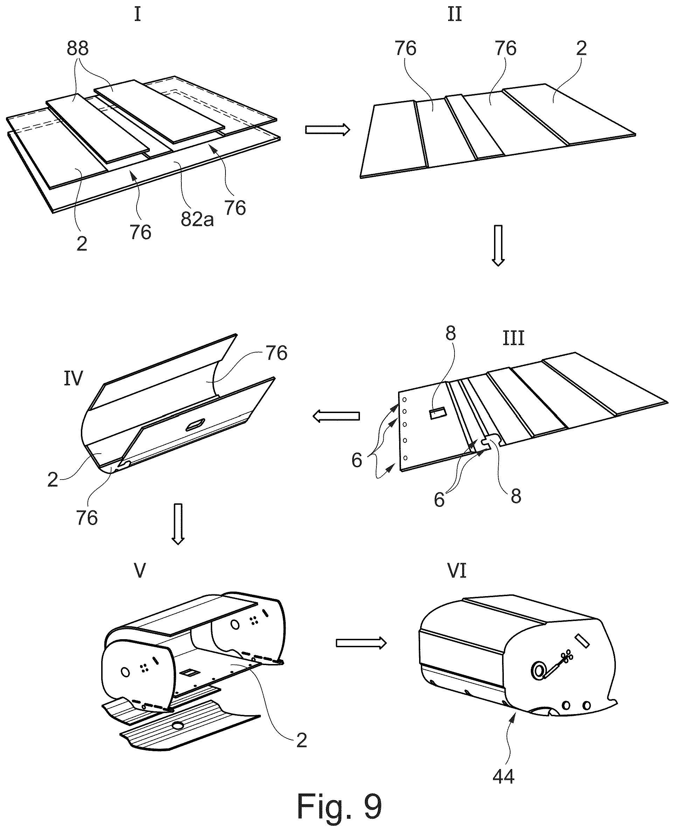

Figur 9 zeigt die Herstellung eines OHSC 44 mithilfe von Sandwichbauteilen 2 in Form von partiell monolithischen Sandwich-Paneelen gemäß Figur 8. Die Dicke der Sandwich-Bauteile 2 (im partiell monolithischen Bauteil außerhalb der Leerbereiche 76) beträgt hier 10 mm.

Zunächst (Schritt I) erfolgt das Pressen des Sandwich-Bauteils 2 mithilfe zweier Einleger 88 zur Erzielung der partiell monolithischen Bauweise, hier mit 2 Leerbereichen 76. Am fertig gestellten Sandwich-Bauteil 2 (Schritt II) erfolgt anschließend das Ausfräsen von Aussparungen 8 und das Setzen von Anbauteilen 6, hier in Form von Inserts (Schritt III). Anschließend erfolgt ein händisches Biegen des Sandwich Bauteils 2 (Schritt IV) und die Positionierung in einer nicht dargestellten Klebevorrichtung (Schritt V). In der Klebevorrichtung werden auch die weiteren für den OHSC 44 benötigten Sandwich-Bauteile 2, hier Seitenwände und Bodengruppen, platziert. Anschließend erfolgt das Fügen der Einzelteile in der Klebevorrichtung zum fertigen OHSC 44 (Schritt VI). Insgesamt ergibt sich also so ein Herstellungsprozess eines "Bin" / OHSC 44 mit partiell monolithischen Sandwich-Paneelen in Form der Sandwich-Bauteile 2.

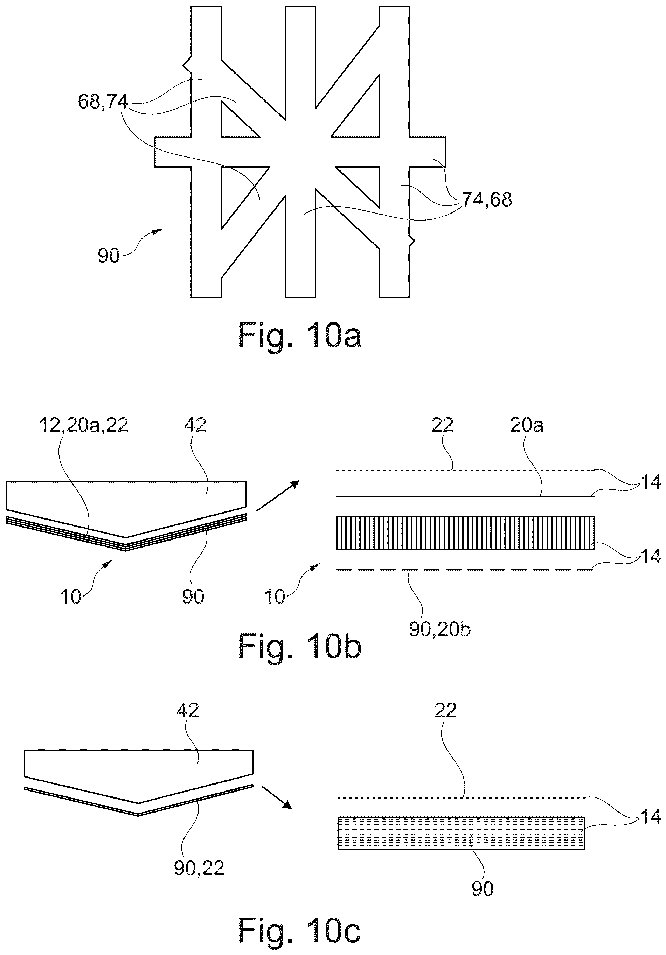

Figur 10a zeigt ein verschweißtes Taylored Blank 90, das entsprechend den Ausführungen zu Figur 6a entsprechend lastpfadgerecht ausgelegt ist. Einzellagen von bzw. einzelne Gewebestreifen 74 in Form von UD-Tapes, also Fasertapes 68 sind dabei miteinander verschweißt. Das vorkonsolidierte Taylored Blank 90 kann entweder monolithisch oder gemeinsam mit einer Decklage 20a,b und einem Wabenkern, d.h. Kernelement 16, zu einem 3D-Sandwich-Bauteil 2 umgeformt werden. Mit anderen Worten wird also mittels des Taylored-Blank-Verfahrens ein lastpfadgerechtes Taylored Blank 90 im Sandwich-Bauteil 2 abgelegt, wobei auch hier die Einzellagen des Sandwich-Bauteils 2 zueinander und miteinander verschweißt werden / sind.

Figur 10b zeigt links symbolisch einen Umformprozess anhand eines Werkzeugs 42, um eine Kombination von Organosheet mit UD-Gelege in Form des Taylored Blank 90 zu erreichen. Der sich ergebende Lagenaufbau 10 besteht wieder aus einer TP-Oberfläche 22, der ersten Decklage 20a, der Kernlage 12 bzw. dem Kernelement 16 und der zweiten Decklage 20b, hier in Form des Taylored Blank 90. Sämtliche Lagen weisen wieder das selbe Grundpolymer 14 auf.

Figur 10c illustriert die Herstellung eines monolithischen Aufbaus. Hierbei wird das glasfaserverstärkte Taylored Blank 90 mit Hilfe des Werkzeugs 42 nur mit der TP-Oberfläche 22 verbunden.

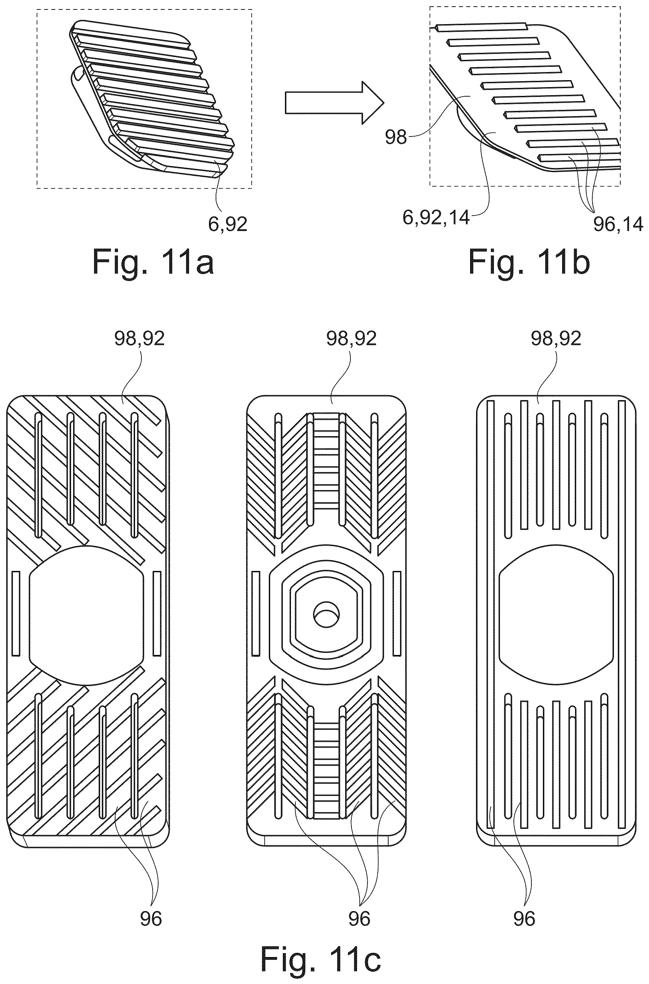

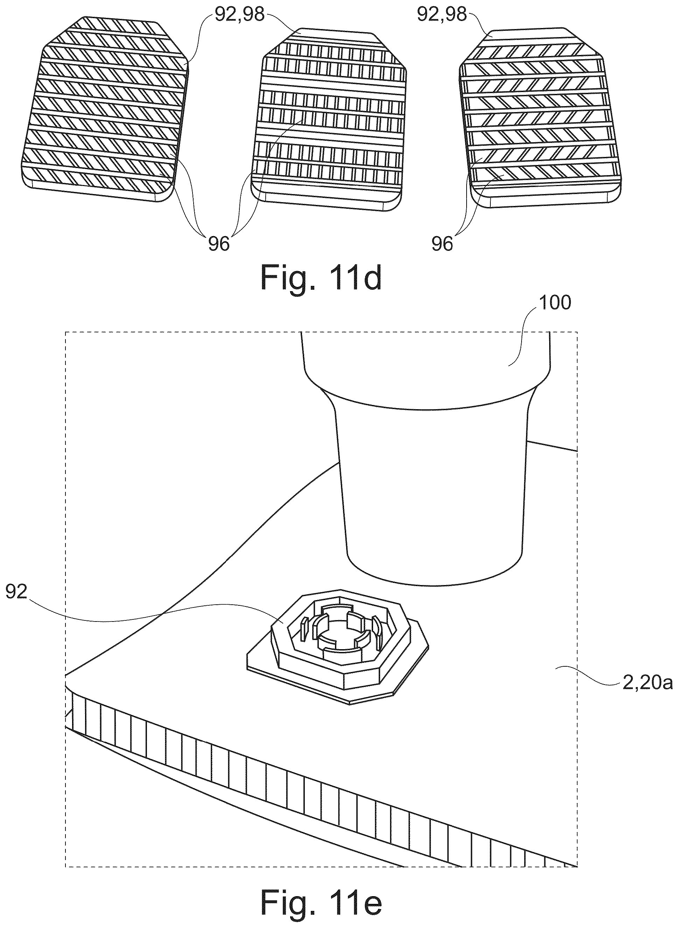

Figur 11 erläutert Anbauteile 6, hier im Beispiel Brackets 92, für das Sandwich-Bauteil 2 und das Ultraschallschweißen der Anbauteile 6 an dem Sandwich-Bauteil 2. Diese bilden dann zusammen eine Bauteilanordnung 94.

Figur 11a zeigt zunächst ein Bracket 92, welches aus der Praxis bekannt ist. Dieses ist für die Erfindung anzupassen, was durch einen Pfeil zwischen Figur 11a und Figur 11b angedeutet ist. Figur 11b zeigt ein Bracket 92 gemäß der Erfindung. Dieses ist mit Energierichtungsgebern 96, auch Energiedirektoren genannt, versehen. Diese sorgen dafür, dass während der Ultraschallbewegung ein Aufschmelzen und eine stoffschlüssige Verbindung des Brackets 92 mit dem Sandwich Bauteil 2 erfolgt. Die Energierichtungsgeber 96 sind an einer "Rückseite" des Anbauteils 6 angeordnet (die später am Sandwich-Bauteil 2 anliegt) und bestehen aus dem gleichen Bracketmaterial, d.h. dem Grundpolymer 14, hier im Beispiel PEI.

Durch die Energierichtungsgeber 96 wird die Wärmeerzeugung an der Grenzfläche zwischen den zu verbindenden Komponenten Bracket 92 und Sandwich Bauteil 2 gefördert. Die Energierichtungsgeber 96 weisen im Querschnitt eine dreieckige Form auf, wobei eine Seite des Dreiecks auf der im Montagezustand dem Sandwich Bauteil 2 angeordneten Kontaktfläche 98 der Brackets 92 angeordnet ist. Durch die dreieckige Form wird eine gezielte und konzentrierte Energieeinleitung erreicht, die das Material der Energierichtungsgeber 96, nämlich das Grundpolymer 14, zum Schmelzen bringt. Das Bracket 92 wird hierbei auf der ersten Decklage 20a angebracht, welche wie oben erläutert aus Glasfaser und Grundpolymer 14, also hier auch PEI besteht. Somit entsteht eine komplette Ankopplung zwischen Sandwich-Bauteil 2 und Bracket 92.

Figur 11c zeigt verschiedene Ausführungsformen für die Form und Anordnung der Energierichtungsgeber 96 auf der Kontaktfläche 98 alternativer Brackets 92. Links in der Figur in Form von Schrägstreifen, mittig nach Art eines Fischgrätmusters mit Zwischenanordnung quer verlaufender Streifen, rechts als parallele Streifen.

Figur 11d zeigt für nochmals alternative Brackets 92 an deren Kontaktfläche 98 nochmals verschiedene Ausführungsformen von Energierichtungsgebern 96. Links in Form von Reihen von Schrägstreifen, in der Mitte in Form von gekreuzten Anordnungen und rechts nach Art eines Fischgrätmusters.

Figur 11e zeigt einen Teil einer Ultraschallschweißanlage 100, nachdem diese dazu genutzt wurde, das Bracket 92 mit dessen Kontaktfläche 98 (im Bild nach unten gewandt) auf der nach oben weisenden ersten Decklage 20a des Sandwichbauteils 2 anzubringen.

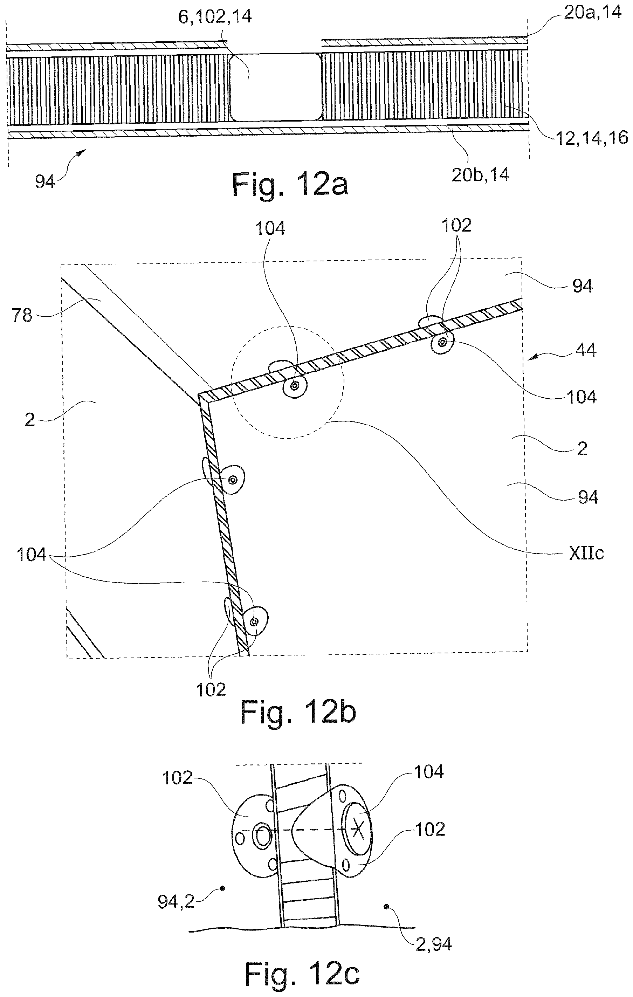

Figur 12 illustriert das Anbringen von Anbauteilen 6 an einem Sandwich-Bauteil 2 mithilfe des Reibschweißens. Dabei erfolgt ein Durchbruch durch die (vorher vorhandene) obere Decklage 20a.

Figur 12a zeigt eine entsprechend fertig gestellte Bauteilanordnung 94, bei der ein Reibschweißinsert 102 als Anbauteil 6 in die Kernlage 12 des Sandwichbauteils 2 mit Hilfe des Reibschweißens eingebracht wurde. Auch das Reibschweißinsert 102 weist dabei wie die beiden Decklagen 20a,b und die Kernlage 12 bzw. das Kernelement 16 das selbe Grundpolymer 14, hier PEI, auf. Somit weisen alle Komponenten der Bauteilanordnung 94 wieder dasselbe Thermoplast in Form des Grundpolymers 14 auf.

Figur 12b zeigt einen Teil eines OHSC 44 bzw. "Bin" als Anwendungsbeispiel. Zwei - im Bild oben und links - Seitenwände sind hierbei als mit einer Rundung 78 versehenes, partiell monolithisches Sandwich Paneel bzw. Sandwich-Bauteil 2 ausgeführt, wie es oben erläutert wurde. Eine weitere, im Bild vordere Seitenwand ist als 2D-Sandwich-Bauteil 2 ausgeführt. Beide Sandwich-Bauteile 2 weisen an ihren im gezeigten Montagezustand aneinander anliegenden Rändern Reibschweißinserts 102 auf, die in die jeweiligen Sandwich-Bauteile 2 eingebracht bzw. eingerieben wurden. Die Sandwich-Bauteile 2 sind nach dem Einbringen der Reibschweißinserts 102 so beschnitten, dass ein Teil der Reibschweißinserts 102 dabei entfernt wurde, und ein Rest der Reibschweißinserts 102 im jeweiligen Sandwich Bauteil 2 verblieben ist. Die Reibschweißinserts 102 sind so platziert, dass sie im Montagezustand aneinander anliegen. Schrauben 104 durchsetzen und verbinden dadurch jeweils zwei aneinander anliegende (teilbeschnittene) Reibschweißinserts 102 in je einem der Sandwich-Bauteilen 2 miteinander. So sind vermittels der verbundenen Reibschweißinserts 102 die beiden Sandwich-Bauteile 2 aneinander lösbar befestigt / verschraubt.

Figur 12c zeigt den Ausschnitt XIIc aus Figur 12b im Detail. Hier ist nochmals zu erkennen, wie beide Reibschweißinserts 102 nach dem Einbringen in das jeweilige Sandwich-Bauteil 2 zusammen mit diesem teilweise beschnitten wurden und wie die Schraube 104 beide Reibschweißinserts 102 durchsetzt, um die beiden Sandwich-Bauteile 2 aneinander zu befestigen. Das Durchsetzen der Schraube 104 ist durch eine gestrichelte Linie angedeutet. Mit anderen Worten wird die Schraube 104 im in der Figur 12c links dargestellten Reibschweißinsert 102 verschraubt.

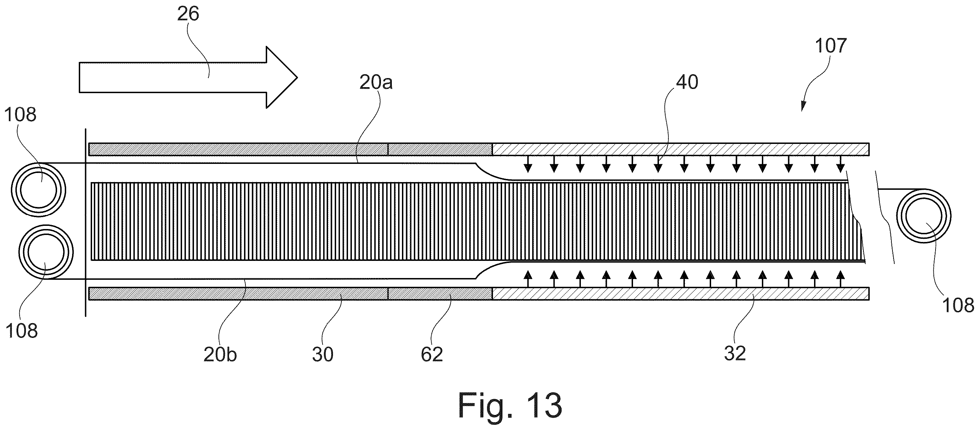

Figur 13 illustriert das Herstellverfahren nach der Variante a) für das Sandwich Bauteil 2 gemäß Figur 1b, d.h. ohne die Verwendung zusätzlicher TP-Filme 24a,b. Die Bewegungsrichtung 26 des Sandwich-Bauteils 2 in der Doppelbandpresse 107 ist wieder durch einen Pfeil 26 angedeutet. In der Heizzone 30 erfolgt ein kurzfristiges Aufschmelzen der Decklagen 20a,b. Nach Durchlaufen der Übergangszone 62 erfolgt das Abkühlen der Decklagen 20a,b unter leichtem Druck 40 in der Kühlzone 32. Rollen 108 zur Abgabe bzw. Aufnahme von Material stellen symbolisch die Kontinuierlichkeit des Fertigungsprozesses in der Bewegungsrichtung 26 dar.

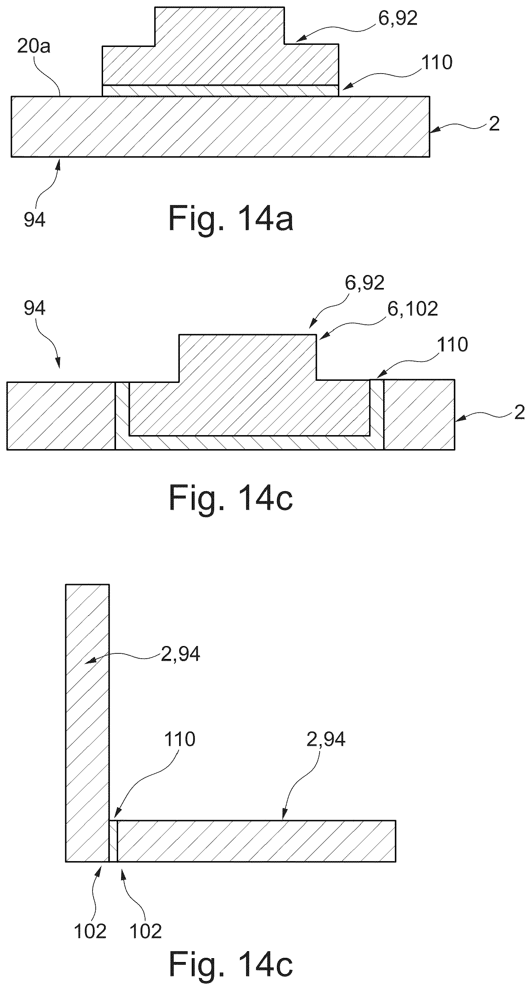

Figur 14 veranschaulicht verschiedene Arten bzw. Weisen des Fügens im Zusammenhang mit den Sandwich-Bauteilen 2.

Figur 14a illustriert das Fügen eines Anbauteils 6 in Form eines im Betrieb moderat belasteten Brackets 92. An einer Fügezone 110 wird das Bracket 92 auf die obere Decklage 20a gefügt. Hier handelt es sich also um ein Fügen auf die obere Decklage 20a bei geringen Lasten. Dies gilt für sämtliche möglichen Fügeverfahren wie Ultraschallschweißen, Laserschweißen, Siegelschweißen, Reibschweißen und die mechanische Verbindung über Reibschweißinserts 102. Die Brackets 92 können hierbei wie oben beschrieben Kunststoffbrackets sein, die vollständig aus dem Grundpolymer 14 bestehen. Es kann sich aber auch um Aluminium-Brackets handeln, die lediglich zum Teil aus dem Grundpolymer 14 bestehen bzw. dieses als Teil enthalten, um die Fügezone 110 (Grundpolymer 14 des Brackets 92 an Grundpolymer 14 der Decklage 20a) realisieren zu können.

Figur 14b illustriert das Fügen mit Krafteinleitung in das Innere der Sandwichstruktur also des Sandwich-Bauteils 2 bei hohen Lasten. Hier wird das Anbauteil 6 in dem Kernelement 16 angeordnet. Die Fügezone 110 durchdringt hier also das Sandwich-Bauteil 2. Das Anbauteil 6 ist also hier beispielsweise ein Reibschweißinsert 102, in einer alternativen Ausführungsform jedoch auch ein hochbelastetes Bracket 92.

Figur 14c erläutert nochmals das Fügen gemäß der Figuren 12b,c mithilfe von Reibschweißinserts 102 als Anbauteilen 6, welche in Sandwich-Bauteile 2 eingebracht sind. Somit werden gemäß Figur 14c zwei Bauteilanordnungen 94 in bzw. an der Fügezone 110 aneinandergefügt. Alternativ wäre hier auch ein Siegelschweißen in der Fügezone 110 möglich, wenn auf die Reibschweißinserts 102 verzichtet wird. So können zwei Sandwich-Bauteile 2 aneinandergefügt werden.

Auch für die Figuren 14a und 14b könnte in nicht dargestellter Weise eine mechanische Verbindung realisiert sein. Die Anbauteile 6 würden dann über in das Sandwich-Bauteil 2 eingebettete Reibschweißinserts 102 und Schrauben 104 befestigt. Mit anderen Worten könnten sinngemäß also Brackets 92 auch nach Art von Figur 12c sinngemäß an einer Bauteilanordnung 94, enthaltend Reibschweißinserts 102 angeschraubt werden.

### Bezugszeichenliste

- 2: Sandwich-Bauteil
- 4: Oberfläche
- 6: Anbauteil
- 8: Aussparung
- 10: Lagenaufbau
- 12: Kernlage
- 14: Grund-Polymer
- 16: Kernelement
- 18a,b: Flachseite (Kernlage)
- 20a,b: erste, zweite Decklage
- 22: TP-Oberfläche
- 24a,b: TP-Film
- 26: Bewegungsrichtung
- 28: Hitzeeintrag
- 30: Heizzone
- 32: Kühlzone
- 34: Abkühlung
- 36: IR-Feld
- 38: Pfeil (Erreichen Schmelztemperatur)
- 40: Druck
- 42: Werkzeug
- 44: OHSC
- 46: Korpus
- 48: Klappe
- 50: Halbzeug
- 52: Spritzbrenner
- 54: Flamme
- 56: Brennergas
- 58: Energie
- 60: Kühlung
- 62: Übergangszone
- 64: Prägewalze
- 66: Prägeform
- 68: Fasertape
- 70: Bereich (faserfrei)
- 72: Restschicht
- 74: Gewebestreifen
- 76: Leerbereich
- 78: Rundung
- 80: Kantenabschluss
- 82a,b: Unter-, Oberpressenplatte
- 84: Schutzfolie
- 86: Rahmen
- 88: Einleger
- 90: Taylored Blank
- 92: Bracket
- 94: Bauteilanordnung
- 96: Energierichtungsgeber
- 98: Kontaktfläche
- 100: Ultraschallschweißanlage
- 102: Reibschweißinsert
- 104: Schraube
- 106: Kaschieranlage
- 107: Doppelbandpresse
- 108: Rollen
- 110: Fügezone
- 112: Prägung
- 114: Dekorlage
- 116: Thermoformanlage

- I-VI: Schritt

## Patentansprüche

1. Sandwich-Bauteil (2) für eine Innenausstattung einer Passagierkabine eines Passagierflugzeuges,
- mit einer sich flächig erstreckenden, ein Grundpolymer (14) enthaltenden Kernlage (12), die wenigstens ein Kernelement (16) in Form eines Wabenkerns enthält, und die eine erste (18a) und eine zweite Flachseite (18b) aufweist,
- mit einer faserverstärkten, das Grundpolymer (14) enthaltenden ersten Decklage (20a), die an der ersten Flachseite (18a) angeordnet ist,
- mit einer faserverstärkten, das Grundpolymer (14) enthaltenden zweiten Decklage (20b), die an der zweiten Flachseite (18b) angeordnet ist,
- wobei das Sandwich-Bauteil (2) nach einem Monopolymerprinzip aufgebaut ist, bei dem die Kernlage (12) und die beiden Decklagen (20a,b) aus dem gleichen Polymer in Form des Grundpolymers (14) aufgebaut sind,
- wobei die beiden Decklagen (20a,b) ausschließlich dank des Grundpolymers (14) ohne Zwischenlage einer stofffremden Klebeschicht an der Kernlage (12) befestigt sind.

2. Sandwich-Bauteil (2) nach Anspruch 1,
**dadurch gekennzeichnet, dass**
die erste (20a) und/oder zweite Decklage (20b) dadurch faserverstärkt ist, dass unidirektionale, das Grundpolymer (14) enthaltende Fasertapes (68) ausschließlich entlang von Lastpfaden angeordnet sind und die übrigen Bereiche (70) faserfrei gehalten sind.

3. Sandwich-Bauteil (2) nach Anspruch 2,
**dadurch gekennzeichnet, dass**
in wenigstens einem der faserfrei gehaltenen Bereiche (70) das Kernelement (16) bis auf eine Restschicht (72) ausgespart ist.

4. Sandwich-Bauteil (2) nach einem der vorhergehenden Ansprüche,
**dadurch gekennzeichnet, dass**
die erste (20a) und/oder zweite Decklage (20b) dadurch faserverstärkt ist, dass glasfaserverstärkte, das Grundpolymer (14) enthaltende unidirektionale Gewebestreifen (74) kreuzweise angeordnet sind und die übrigen Bereiche (70) faserfrei gehalten sind.

5. Sandwich-Bauteil (2) nach einem der vorhergehenden Ansprüche,
**dadurch gekennzeichnet, dass**
die erste (20a) und / oder zweite Decklage (20b) dadurch faserverstärkt ist, dass die Decklage (20a,b) aus einem das Grundpolymer (14) enthaltenden Taylored blank (90) gebildet ist, das unidirektionale Gewebestreifen (74) enthält, die miteinander vorkonsolidiert sind.

6. Sandwich-Bauteil (2) nach einem der vorhergehenden Ansprüche,
**dadurch gekennzeichnet, dass**
das Sandwich-Bauteil (2) eine das Grundpolymer (14) enthaltende Dekorlage (114) enthält, die auf einer der Kernlage (12) abgewandten Flachseite der ersten Decklage (20a) angeordnet ist.

7. Sandwich-Bauteil (2) nach einem der vorhergehenden Ansprüche,
**dadurch gekennzeichnet, dass**
das Grundpolymer (14) der ersten Decklage (20a) an einer der Kernlage (12) abgewandten Flachseite eine Prägung (112) aufweist.

8. Sandwich-Bauteil (2) nach einem der vorhergehenden Ansprüche,
**dadurch gekennzeichnet, dass**
- auf eine der Kernlage (12) abgewandte Flachseite der ersten Decklage (20b) eine eingefärbte Dekorlage (114) aufgebracht ist,
- und / oder
- die erste Decklage (20b) und / oder die zweite Decklage (20b) selbst eingefärbt ist.

9. Sandwich-Bauteil (2) nach Anspruch 8,
**dadurch gekennzeichnet, dass**
die Dekorlage (114) auf die erste Decklage (20b) dadurch aufgebracht, dass diese aufgespritzt ist.

10. Sandwich-Bauteil (2) nach einem der vorhergehenden Ansprüche,
**dadurch gekennzeichnet, dass**
die Kernlage (12) dadurch gebildet ist, dass die Kernelemente (16) nicht flächendeckend angeordnet sind, so dass wenigstens ein Leerbereich (76) ohne Kernelement (16) in der Kernlage (12) vorhanden ist.

11. Bauteilanordnung (94),
mit dem Sandwich-Bauteil (2) nach einem der vorhergehenden Ansprüche, und
mit wenigstens einem Anbauteil (6), das zumindest zur Verbindung mit dem Sandwich-Bauteil (2) das Grundpolymer (14) enthält.

12. Verfahren zur Herstellung des Sandwich-Bauteils (2) nach einem der Ansprüche 1 bis 10, bei dem:
a)
- entweder die beiden Decklagen (20a,b) und die Kernlage (12) in einer Doppelbandpresse (107) miteinander zu einem zweidimensionalen Sandwich-Bauteil (2) verbunden werden, oder
- die beiden Decklagen (20a,b) und die Kernlage (12) einer Doppelbandpresse (107) miteinander zu einem zweidimensionalen Sandwich-Bauteil (2) verbunden werden, wobei wenigstens eine der beiden Decklagen (20a,b) und die Kernlage (12) über einen thermoplastischen Film (24a,b) enthaltend das Grundpolymer (14) in der Kaschieranlage (106) miteinander verbunden werden,
b) oder die Decklagen (20a,b) in einer Thermoformanlage (116) mit einem Abstand zueinander auf die Schmelztemperatur aufgeheizt werden, wobei die Kernlage (12) auf der zweiten Decklage (20b) aufliegt und nach Erreichen der Schmelztemperatur die beiden Decklagen (20a,b) und die Kernlage (12) in einem Werkzeug (42) zu einem dreidimensionalen Sandwich-Bauteil (2) umgeformt werden, wobei sich vor Abkühlen unter die Glasübergangstemperatur die beiden Decklagen (20a,b) und die Kernlage (12) in einem nahezu schmelzflüssigen Zustand befinden, so dass eine Verbindung rein über die Schmelze erfolgen kann.

13. Verfahren nach Anspruch 12 in Verbindung mit Anspruch 3,
**dadurch gekennzeichnet, dass**
wenigstens einer der faserfrei gehaltenen Bereiche (70) dadurch ausgespart wird, dass dort eine lokale Ausfräsung des Kernelements (16) vorgenommen wird, bis nur noch die Restschicht (72) vorhanden ist.
